# EUROPEAN PATENT APPLICATION

(11) **EP 4 492 717 A1**
(43) Date of publication of application: **15.01.2025**
(21) Application number: 23765992.5
(22) Date of filing: 07.03.2023
(51) Int. Cl.: H04L 5/00

(54) **POSITIONING METHOD, APPARATUS, TERMINAL, NETWORK SIDE DEVICE, AND STORAGE MEDIUM**

(30) Priority: 09.03.2022 CN 202210226250
(71) Applicant: Datang Mobile Communications Equipment Co., Ltd., Beijing 100085 (CN)
(72) Inventor: LI, Hui, Beijing 100085 (CN); DA, Ren, Beijing 100085 (CN); REN, Xiaotao, Beijing 100085 (CN); REN, Bin, Beijing 100085 (CN)
(74) Representative: Studio Torta S.p.A.
(86) International application number: PCT/CN2023/080061
(87) International publication number: WO 2023/169414

(57) **Abstract**

The present disclosure belongs to the technical field of communication, and embodiments of the present disclosure provide a positioning method, an apparatus, a terminal, a network side device, and a storage medium. The method comprises: in a sidelink scenario, determining target resource configuration information of a positioning reference signal (PRS); and executing a positioning procedure on a terminal to undergo positioning on the basis of the target resource configuration information, where a target terminal comprises any one or more of the following: a source positioning terminal; or the terminal to undergo positioning. In a sidelink scenario, resource configuration information of a PRS allocated to a terminal is determined, and positioning of a terminal to undergo positioning on the basis of the resource configuration information of the PRS is implemented; the lack of resource configuration of a PRS in a sidelink scenario as well as performing positioning on the basis of the configured PRS can be resolved, PRSs sent between terminals can be prevented from colliding, and higher precision positioning is implemented.

## Description

### CROSS-REFERENCES TO RELATED APPLICATIONS

The present application claims priority to Chinese patent application No. 202210226250.1 filed on March 09, 2022, entitled "Positioning Method, Apparatus, Terminal, Network Side Device, and Storage Medium", which is hereby incorporated by reference in its entirety.

### FIELD

The present application relates to the field of communication, and in particular, to positioning methods and apparatuses, a terminal, a network side device and a storage medium.

### BACKGROUND

Sidelink is used for direct transmission between terminals. However, positioning reference signals (PRSs) transmitted between terminals may conflict in a sidelink scenario, which affects positioning accuracy for a to-be-positioned terminal.

Therefore, how to avoid conflicts between PRSs transmitted between terminals in the sidelink scenario for a higher-precision positioning has become an urgent problem to be solved.

### BRIEF SUMMARY

In response to the problem in the related art that positioning reference signals (PRSs) transmitted between terminals in the sidelink scenario may conflict, embodiments of the present application provide positioning methods and apparatuses, a terminal, a network device and a storage medium, which configure a resource for the PRS, position a to-be-positioned terminal based on the configured PRS, avoid a conflict between PRSs transmitted between terminals, and position with a higher accuracy.

An embodiment of the present application provides a positioning method, performed by a target terminal, including:
determining target resource configuration information for a positioning reference signal (PRS) in a sidelink scenario; and
performing a positioning procedure on a to-be-positioned terminal based on the target resource configuration information;
the target terminal includes one or more of the following:
   a source positioning terminal; or
   the to-be-positioned terminal.

In an embodiment, determining the target resource configuration information for the PRS includes:
determining the target resource configuration information based on first information;
the first information includes one or more of the following:
   identity (ID) information of the target terminal; or
   at least one first resource pool, where any first resource pool among the at least one first resource pool includes one or more items of first candidate resource configuration information; or
   first configuration indication information, where the first configuration indication information is used for indicating the target resource configuration information; or
   a first relationship between the ID information of the target terminal and the first candidate resource configuration information.

In an embodiment, in case that the first information includes the at least one first resource pool and the at least one first resource pool is one first target resource pool, determining the target resource configuration information based on the first information includes:
determining the target resource configuration information from the one or more items of first candidate resource configuration information, where the one or more items of first candidate resource configuration information are included in the first target resource pool.

In an embodiment, in case that the first information includes the at least one first resource pool and the at least one first resource pool includes multiple first resource pools, determining the target resource configuration information based on the first information includes:
determining one first resource pool from the multiple first resource pools as a second target resource pool; and
determining the target resource configuration information from the one or more items of first candidate resource configuration information, where the one or more items of first candidate resource configuration information are included in the second target resource pool.

In an embodiment, determining the target resource configuration information from the one or more items of first candidate resource configuration information includes:
determining the target resource configuration information randomly from the one or more items of first candidate resource configuration information.

In an embodiment, in case that the first information further includes the first configuration indication information, determining the target resource configuration information from the one or more items of first candidate resource configuration information includes:
determining the target resource configuration information from the one or more items of first candidate resource configuration information based on the first configuration indication information.

In an embodiment, in case that the first information further includes the ID information of the target terminal and the first relationship, determining the target resource configuration information from the one or more items of first candidate resource configuration information includes:
determining the target resource configuration information from the one or more items of first candidate resource configuration information based on the ID information of the target terminal and the first relationship;
the first relationship includes any of the following:
   an operation rule between the ID information of the target terminal and an index of the first candidate resource configuration information; or
   a mapping relationship between the ID information of the target terminal and an index of the first candidate resource configuration information.

In an embodiment, determining the target resource configuration information for the PRS includes:
determining the target resource configuration information based on second information;
the second information includes one or more of the following:
   the ID information of the target terminal; or
   at least one second resource pool, where any second resource pool among the at least one second resource pool includes one or more items of second candidate resource configuration information, and any item of second candidate resource configuration information among the one or more items of second candidate resource configuration information is resource configuration information of a first part category; or
   a third resource pool, where the third resource pool includes one or more items of third candidate resource configuration information, any item of third candidate resource configuration information among the one or more items of third candidate resource configuration information is resource configuration information of a second part category, and the second part category includes a category different from the first part category; or
   third configuration indication information, where the third configuration indication information is used for indicating the target resource configuration information of the first part category.

In an embodiment, in case that the second information includes the at least one second resource pool and the third resource pool, and the at least one second resource pool is one third target resource pool, determining the target resource configuration information based on second information includes:
determining the target resource configuration information of the first part category from the one or more items of second candidate resource configuration information, where the one or more items of second candidate resource configuration information are included in the third target resource pool; and
determining the target resource configuration information of the second part category from the one or more items of third candidate resource configuration information.

In an embodiment, in case that the second information includes the at least one second resource pool and the third resource pool, and the at least one second resource pool includes multiple second resource pools, determining the target resource configuration information based on second information includes:
determining one of the second resource pools as a fourth target resource pool from the multiple second resource pools;
determining the target resource configuration information of the first part category from the one or more items of second candidate resource configuration information, where the one or more items of second candidate resource configuration information are included in the fourth target resource pool; and
determining the target resource configuration information of the second part category from the one or more items of third candidate resource configuration information.

In an embodiment, determining the target resource configuration information of the first part category from the one or more items of second candidate resource configuration information includes:
determining the target resource configuration information of the first part category randomly from the one or more items of second candidate resource configuration information.

In an embodiment, determining the target resource configuration information of the second part category from the one or more items of third candidate resource configuration information includes:
determining the target resource configuration information of the second part category randomly from the one or more items of third candidate resource configuration information.

In an embodiment, in case that the second information further includes the third configuration indication information, determining the target resource configuration information of the first part category from the one or more items of second candidate resource configuration information includes:
determining the target resource configuration information of the first part category from the one or more items of second candidate resource configuration information based on the third configuration indication information.

In an embodiment, in case that the target terminal includes the to-be-positioned terminal, the method further includes:
transmitting the determined target resource configuration information to the source positioning terminal.

In an embodiment, in case that the target terminal includes the source positioning terminal, the method further includes:
transmitting the determined target resource configuration information to the to-be-positioned terminal.

In an embodiment, in case that the target terminal includes the to-be-positioned terminal, the method further includes:
receiving the target resource configuration information determined by the source positioning terminal; and
transmitting acknowledgement information to the source positioning terminal in case that it is determined that the target resource configuration information determined by the source positioning terminal is used; or, determining expected target resource configuration information and transmitting the expected target resource configuration information to the source positioning terminal in case that it is determined that the target resource configuration information determined by the source positioning terminal is not used.

In an embodiment, in case that the target terminal includes the source positioning terminal, performing the positioning procedure on the to-be-positioned terminal based on the target resource configuration information includes:
transmitting the PRS to the to-be-positioned terminal based on the target resource configuration information, where the PRS is used for determining a positioning measurement amount, and the positioning measurement amount is used for determining location information of the to-be-positioned terminal.

In an embodiment, in case that the target terminal includes the to-be-positioned terminal, performing the positioning procedure on the to-be-positioned terminal based on the target resource configuration information includes:
receiving the PRS transmitted from the source positioning terminal;
determining a positioning measurement amount based on the PRS; and
determining location information of the to-be-positioned terminal based on the positioning measurement amount.

In an embodiment, in case that the target terminal includes the to-be-positioned terminal, before determining the target resource configuration information for the PRS, the method further includes:
transmitting positioning request information to the source positioning terminal.

An embodiment of the present application provides a positioning method, performed by a network side device, including:
transmitting third information to a target terminal, where the third information is used for determining target resource configuration information for a positioning reference signal (PRS), and the target resource configuration information is used for positioning a to-be-positioned terminal;
the target terminal includes one or more of the following:
   a source positioning terminal; or
   the to-be-positioned terminal.

In an embodiment, the third information includes one or more of the following:
at least one first resource pool, where any first resource pool among the at least one first resource pool includes one or more items of first candidate resource configuration information; or
at least one second resource pool, where any second resource pool among the at least one second resource pool includes one or more items of second candidate resource configuration information, and any item of second candidate resource configuration information among the one or more items of second candidate resource configuration information is resource configuration information of a first part category; or
a third resource pool, where the third resource pool includes one or more items of third candidate resource configuration information, any item of third candidate resource configuration information among the one or more items of third candidate resource configuration information is resource configuration information of a second part category, and the second part category includes a category different from the first part category; or
first configuration indication information, where the first configuration indication information is used for indicating the target resource configuration information; or
third configuration indication information, where the third configuration indication information is used for indicating the target resource configuration information of the first part category; or
a first relationship between identity (ID) information of the target terminal and the first candidate resource configuration information.

In an embodiment, the method further includes:
receiving a positioning measurement amount transmitted from the to-be-positioned terminal; and
determining location information of the to-be-positioned terminal based on the positioning measurement amount;
the positioning measurement amount is determined by the to-be-positioned terminal based on the PRS transmitted from the source positioning terminal, and the PRS is determined by the source positioning terminal based on the target resource configuration information.

An embodiment of the present application provides a target terminal, including a memory, a transceiver and a processor,
where the memory is used for storing a computer program, the transceiver is used for transmitting and receiving data under control of the processor, and the processor is used for reading the computer program in the memory and performing the above-mentioned method performed by the target terminal.

An embodiment of the present application provides a network side device, including a memory, a transceiver and a processor,
where the memory is used for storing a computer program, the transceiver is used for transmitting and receiving data under control of the processor, and the processor is used for reading the computer program in the memory and performing the above-mentioned method performed by the network side device.

An embodiment of the present application provides a positioning apparatus, applied to a target terminal, including:
a determining unit, used for determining target resource configuration information for a positioning reference signal (PRS) in a sidelink scenario; and
a positioning unit, used for performing a positioning procedure on a to-be-positioned terminal based on the target resource configuration information;
the target terminal includes one or more of the following:
   a source positioning terminal; or
   the to-be-positioned terminal.

In an embodiment, the determining unit is further used for:
determining the target resource configuration information based on first information;
the first information includes one or more of the following:
   identity (ID) information of the target terminal; or
   at least one first resource pool, where any first resource pool among the at least one first resource pool includes one or more items of first candidate resource configuration information; or
   first configuration indication information, where the first configuration indication information is used for indicating the target resource configuration information; or
   a first relationship between the ID information of the target terminal and the first candidate resource configuration information.

In an embodiment, the determining unit is further used for:
determining the target resource configuration information from the one or more items of first candidate resource configuration information in case that the first information includes the at least one first resource pool and the at least one first resource pool is one first target resource pool, where the one or more items of first candidate resource configuration information are included in the first target resource pool.

In an embodiment, the determining unit is further used for:
in case that the first information includes the at least one first resource pool and the at least one first resource pool includes multiple first resource pools:
   determining one first resource pool from the multiple first resource pools as a second target resource pool; and
   determining the target resource configuration information from the one or more items of first candidate resource configuration information, where the one or more items of first candidate resource configuration information are included in the second target resource pool.

In an embodiment, the determining unit is further used for:
determining the target resource configuration information randomly from the one or more items of first candidate resource configuration information.

In an embodiment, the determining unit is further used for:
determining the target resource configuration information from the one or more items of first candidate resource configuration information based on the first configuration indication information in case that the first information further includes the first configuration indication information.

In an embodiment, the determining unit is further used for:
determining the target resource configuration information from the one or more items of first candidate resource configuration information based on the ID information of the target terminal and the first relationship in case that the first information further includes the ID information of the target terminal and the first relationship;
the first relationship includes any of the following:
   an operation rule between the ID information of the target terminal and an index of the first candidate resource configuration information; or
   a mapping relationship between the ID information of the target terminal and an index of the first candidate resource configuration information.

In an embodiment, the determining unit is further used for:
determining the target resource configuration information based on second information;
the second information includes one or more of the following:
   the ID information of the target terminal; or
   at least one second resource pool, where any second resource pool among the at least one second resource pool includes one or more items of second candidate resource configuration information, and any item of second candidate resource configuration information among the one or more items of second candidate resource configuration information is resource configuration information of a first part category; or
   a third resource pool, where the third resource pool includes one or more items of third candidate resource configuration information, any item of third candidate resource configuration information among the one or more items of third candidate resource configuration information is resource configuration information of a second part category, and the second part category includes a category different from the first part category; or
   third configuration indication information, where the third configuration indication information is used for indicating the target resource configuration information of the first part category.

In an embodiment, the determining unit is further used for:
in case that the second information includes the at least one second resource pool and the third resource pool, and the at least one second resource pool is one third target resource pool:
determining the target resource configuration information of the first part category from the one or more items of second candidate resource configuration information, where the one or more items of second candidate resource configuration information are included in the third target resource pool; and
determining the target resource configuration information of the second part category from the one or more items of third candidate resource configuration information.

In an embodiment, the determining unit is further used for:
in case that the second information includes the at least one second resource pool and the third resource pool and the at least one second resource pool includes multiple second resource pools:
determining one of the second resource pools as a fourth target resource pool from the multiple second resource pools;
determining the target resource configuration information of the first part category from the one or more items of second candidate resource configuration information, where the one or more items of second candidate resource configuration information are included in the fourth target resource pool; and
determining the target resource configuration information of the second part category from the one or more items of third candidate resource configuration information.

In an embodiment, the determining unit is further used for:
determining the target resource configuration information of the first part category randomly from the one or more items of second candidate resource configuration information.

In an embodiment, the determining unit is further used for:
determining the target resource configuration information of the second part category randomly from the one or more items of third candidate resource configuration information.

In an embodiment, the determining unit is further used for:
determining the target resource configuration information of the first part category from the one or more items of second candidate resource configuration information based on the third configuration indication information in case that the second information further includes the third configuration indication information.

In an embodiment, the apparatus further includes a first transmitting unit, and the first transmitting unit is used for:
transmitting the determined target resource configuration information to the source positioning terminal in case that the target terminal includes the to-be-positioned terminal.

In an embodiment, the first transmitting unit is further used for:
transmitting the determined target resource configuration information to the to-be-positioned terminal in case that the target terminal includes the source positioning terminal.

In an embodiment, the apparatus further includes a first receiving unit, and the first receiving unit is used for:
in case that the target terminal includes the to-be-positioned terminal:
receiving the target resource configuration information determined by the source positioning terminal; and
transmitting acknowledgement information to the source positioning terminal in case that it is determined that the target resource configuration information determined by the source positioning terminal is used; or, determining expected target resource configuration information and transmitting the expected target resource configuration information to the source positioning terminal in case that it is determined that the target resource configuration information determined by the source positioning terminal is not used.

In an embodiment, the positioning unit is further used for:
transmitting the PRS to the to-be-positioned terminal based on the target resource configuration information in case that the target terminal includes the source positioning terminal, where the PRS is used for determining a positioning measurement amount, and the positioning measurement amount is used for determining location information of the to-be-positioned terminal.

In an embodiment, the positioning unit is further used for:
in case that the target terminal includes the to-be-positioned terminal:
receiving the PRS transmitted from the source positioning terminal;
determining a positioning measurement amount based on the PRS; and
determining location information of the to-be-positioned terminal based on the positioning measurement amount.

In an embodiment, the apparatus further includes a third transmitting unit, and the third transmitting unit is used for:
transmitting positioning request information to the source positioning terminal in case that the target terminal includes the to-be-positioned terminal.

An embodiment of the present application provides a positioning apparatus, applied to a network side device, including:
a fourth transmitting unit, used for transmitting third information to a target terminal, where the third information is used for determining target resource configuration information for a positioning reference signal (PRS), and the target resource configuration information is used for positioning a to-be-positioned terminal;
the target terminal includes one or more of the following:
   a source positioning terminal; or
   the to-be-positioned terminal.

In an embodiment, the third information includes one or more of the following:
at least one first resource pool, where any first resource pool among the at least one first resource pool includes one or more items of first candidate resource configuration information; or
at least one second resource pool, where any second resource pool among the at least one second resource pool includes one or more items of second candidate resource configuration information, and any item of second candidate resource configuration information among the one or more items of second candidate resource configuration information is resource configuration information of a first part category; or
a third resource pool, where the third resource pool includes one or more items of third candidate resource configuration information, any item of third candidate resource configuration information among the one or more items of third candidate resource configuration information is resource configuration information of a second part category, and the second part category includes a category different from the first part category; or
first configuration indication information, where the first configuration indication information is used for indicating the target resource configuration information; or
third configuration indication information, where the third configuration indication information is used for indicating the target resource configuration information of the first part category; or
a first relationship between identity (ID) information of the target terminal and the first candidate resource configuration information.

In an embodiment, the apparatus further includes a second receiving unit, and the second receiving unit is used for:
receiving a positioning measurement amount transmitted from the to-be-positioned terminal; and
determining location information of the to-be-positioned terminal based on the positioning measurement amount;
the positioning measurement amount is determined by the to-be-positioned terminal based on the PRS transmitted from the source positioning terminal, and the PRS is determined by the source positioning terminal based on the target resource configuration information.

An embodiment of the present application provides a processor readable storage medium storing a computer program, where the computer program causes a processor to perform the above-mentioned method performed by the target terminal, or perform the above-mentioned method performed by the network side device.

In the positioning methods and apparatuses, the terminal, the network side device and the storage medium provided by the embodiments of the present application, by determining the resource configuration information for the PRS allocated for the terminal in the sidefink scenario, and positioning the to-be-positioned terminal based on the resource configuration information for the PRS, not only the gap in the resource configuration for PRS in the sidelink scenario and the positioning based on the configured PRS is filled, but also the conflicts between PRSs transmitted between terminals are avoided, and the positioning accuracy is higher.

### BRIEF DESCRIPTION OF THE DRAWINGS

In order to illustrate the solutions disclosed in the embodiments of the present application more clearly, the drawings used in the description of the embodiments are briefly described below. The drawings in the following description are only some embodiments of the present application, and other drawings may be obtained based on these drawings without any creative work for those skilled in the art.
FIG. 1 is a first schematic flowchart of a positioning method according to an embodiment of the present application;
FIG. 2 is a second schematic flowchart of a positioning method according to an embodiment of the present application;
FIG. 3 is a schematic diagram of positioning a vehicle according to an embodiment of the present application;
FIG. 4 is a schematic structural diagram of a target terminal according to an embodiment of the present application;
FIG. 5 is a schematic structural diagram of a network side device according to an embodiment of the present application;
FIG. 6 is a first schematic structural diagram of a positioning apparatus according to an embodiment of the present application; and
FIG. 7 is a second schematic structural diagram of a positioning apparatus according to an embodiment of the present application.

### DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of ordinary skill in the art based on the embodiments of the present application without any creative work belong to the scope of the present application.

The solutions according to the embodiments of the present application may be applicable to various systems, for example, 5G systems. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device, and may further include a core network part, such as an evolved packet system (EPS), a 5G system (5GS), and the like.

The terminal device in the embodiments of the present application may be a device that provides voice and/or data connectivity to a user, a handheld device with a wireless connection function, or other processing devices connected to a wireless modem. In different systems, the names of the terminal device may be different. For example, in the 5G system, the terminal device may be called as a user equipment (UE). A wireless terminal device may communicate with one or more core networks (CNs) via a radio access network (RAN), and the wireless terminal device may be a mobile terminal device, such as a mobile phone (or cellular phone), a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, or a user device, which is not limited in the embodiments of the present application.

The network device in the embodiments of the present application may be a base station, and the base station may include multiple cells providing services for the terminal device. Depending on the specific scenario, the base station may be called an access point, or a device communicating with a wireless terminal device through one or more sectors on the air interface in the access network, or other names. The network device may be used for exchanging received air frames with internet protocol (IP) packets, and acting as a router between the wireless terminal device and the rest of the access network, where the rest of the access network may include an IP communication network. The network device may also coordinate attribute management for the air interface. For example, the network device in the embodiments of the present application may be a base transceiver station (BTS) in a global system for mobile communications (GSM) or a code division multiple access (CDMA), a node B in a wide-band code division multiple access (WCDMA), an evolutional node B (eNB or e-Node B) in a long term evolution (LTE) system, a 5G base station (gNB) in 5G network architecture (next generation system), a home evolved node B (HeNB), a relay node, a femto, or a pico base station (pico), etc., which is not limited in the embodiments of the present application. In some network structures, the network device may include a centralized unit (CU) node and a distributed unit (DU) node, and the centralized unit and the distributed unit may be geographically separated.

In order to better describe the embodiments of the present application, relevant knowledge is introduced below.

Down link positioning reference signal (DL PRS) is defined for the Uu interface of 5G new radio (NR) to support positioning requirements, and the relevant definitions are as follows.

### (1) DL PRS resource set

(1.1) A base station may have one or more reference signal transmission reception points (TRPs), each TRP may have one or two DL PRS resource sets, each DL PRS resource set includes one or more DL PRS resources, and each DL PRS resource has a corresponding DL PRS resource identity (ID); and
(1.2) any DL PRS resource ID in a DL PRS resource set is associated with a single beam transmitted from a single TRP, and a TRP may transmit one or more beams.

### (2) DL PRS resource

(2.1) Each DL PRS resource is configured with a comb size-N used for mapping a DL PRS sequence to a resource unit in the frequency domain;
(2.2) the DL PRS resource is described by at least the following parameters: DL PRS resource ID, sequence ID, comb size-N, resource element (RE) frequency offset, initial slot and symbol of the DL PRS resource, a quantity of symbols of each DL PRS resource (duration of DL PRS resource) and quasi co-location (QCL) information with other DL reference signals;
(2.3) the quantity of symbols of the DL PRS resource may be flexibly configured from the set {2, 4, 6, 12};
(2.4) the comb size-N of the DL PRS resource may be flexibly configured from the set {2, 4, 6, 12}; and
(2.5) the starting physical resource block (PRB) position of the DL PRS resource in the frequency domain is defined relative to the frequency reference point (Point A) of each frequency layer.

There is no configuration for PRS in sidelink system in the related art, and there is also no positioning method based on PRS.

In response to the above problem, embodiments of the present application provide a solution, which may determine the resource configuration information for the PRS allocated to the terminal, and position the to-be-positioned terminal based on the resource configuration information for the PRS.

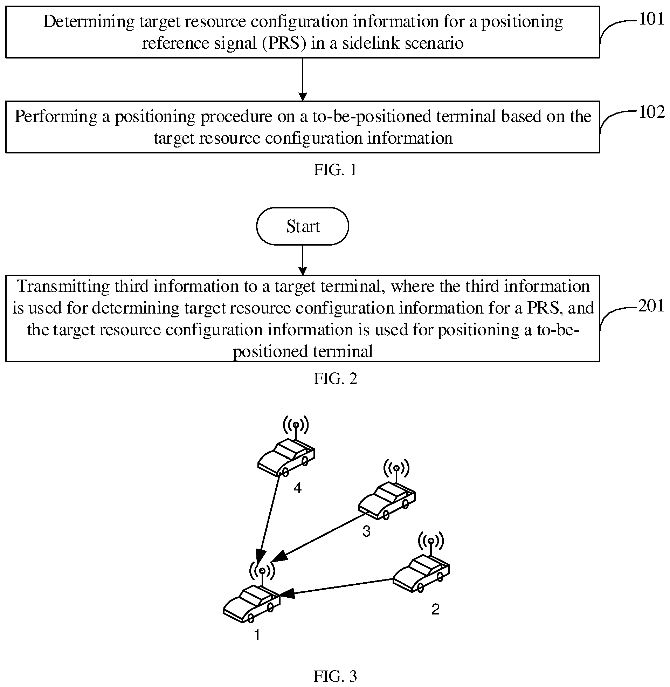

FIG. 1 is a first schematic flowchart of a positioning method according to an embodiment of the present application. As shown in FIG. 1, an embodiment of the present application provides a positioning method, which may be executed by a target terminal, for example, a mobile phone, a vehicle terminal, etc., and the method includes:
step 101: determining target resource configuration information for a positioning reference signal (PRS) in a sidelink scenario; and
step 102: performing a positioning procedure on a to-be-positioned terminal based on the target resource configuration information;
the target terminal includes one or more of the following:
   a source positioning terminal; or
   the to-be-positioned terminal.

In an embodiment, in order to overcome the problem in the related art that the PRSs transmitted between terminals in the sidelink scenario conflict, the target terminal may first determine the target resource configuration information for the PRS, and then the target terminal performs the positioning procedure on the to-be-positioned terminal based on the determined target resource configuration information, which may not only fill the gap in the resource configuration for PRS in the sidelink scenario and the positioning based on the configured PRS, but also avoid the conflicts between PRSs transmitted between terminals, and the positioning accuracy is higher.

In an embodiment, the target terminal may be the source positioning terminal.

For example, in case that the target terminal is the source positioning terminal, the source positioning terminal may first determine the target resource configuration information for the PRS, and then the source positioning terminal performs the positioning procedure on the to-be-positioned terminal based on the determined target resource configuration information.

For example, in the scenario of vehicle positioning, the source positioning terminal is a source positioning vehicle and the to-be-positioned terminal is a to-be-positioned vehicle. The source positioning vehicle may first determine the target resource configuration information for the PRS, and then the source positioning vehicle performs the positioning procedure on the to-be-positioned vehicle based on the determined target resource configuration information.

It should be noted that the above examples are only used to illustrate the embodiments of the present application and are not intended to limit the embodiments of the present application.

In an embodiment, the target terminal may be the to-be-positioned terminal.

For example, in case that the target terminal is the to-be-positioned terminal, the to-be-positioned terminal may first determine the target resource configuration information for the PRS, and then the to-be-positioned terminal performs the positioning procedure on the to-be-positioned terminal based on the determined target resource configuration information.

For example, in the scenario of vehicle positioning, the source positioning terminal is a source positioning vehicle and the to-be-positioned terminal is a to-be-positioned vehicle. The to-be-positioned vehicle may first determine the target resource configuration information for the PRS, and then the to-be-positioned vehicle performs the positioning procedure on the to-be-positioned vehicle based on the determined target resource configuration information.

It should be noted that the above examples are only used to illustrate the embodiments of the present application and are not intended to limit the embodiments of the present application.

In an embodiment, the target terminal may be the source positioning terminal and the to-be-positioned terminal.

For example, in case that the target terminal is the source positioning terminal and the to-be-positioned terminal, the source positioning terminal and the to-be-positioned terminal may determine the target resource configuration information for the PRS respectively, and indicate each other the target resource configuration information determined by each;
in case that the target resource configuration information respectively determined by the source positioning terminal and the to-be-positioned terminal are consistent, the positioning procedure may be performed on the to-be-positioned terminal based on the consistent target resource configuration information determined by both terminals;
in case that the target resource configuration information respectively determined by the source positioning terminal and the to-be-positioned terminal are not consistent, the target resource configuration information determined by any of the source positioning terminal and the to-be-positioned terminal is determined to be used based on an instruction predefined in a protocol or a configured instruction, and the positioning procedure is performed on the to-be-positioned terminal; or, both the source positioning terminal and the to-be-positioned terminal redetermine the target resource configuration information until the target resource configuration information determined by both terminals are consistent, and then the positioning procedure is performed on the to-be-positioned terminal based on the consistent target resource configuration information.

For example, in the scenario of vehicle positioning, the source positioning terminal is a source positioning vehicle and the to-be-positioned terminal is a to-be-positioned vehicle. The source positioning vehicle and the to-be-positioned vehicle may determine the target resource configuration information for the PRS respectively, and indicate each other the target resource configuration information determined by each;
in case that the target resource configuration information respectively determined by the source positioning vehicle and the to-be-positioned vehicle are consistent, the positioning procedure may be performed on the to-be-positioned vehicle based on the consistent target resource configuration information determined by both vehicles;
in case that the target resource configuration information respectively determined by the source positioning vehicle and the to-be-positioned vehicle are not consistent, the target resource configuration information determined by any of the source positioning vehicle and the to-be-positioned vehicle is determined to be used based on an instruction predefined in a protocol or a configured instruction, and the positioning procedure is performed on the to-be-positioned vehicle; or, both the source positioning vehicle and the to-be-positioned vehicle redetermine the target resource configuration information until the target resource configuration information determined by both vehicles are consistent, and then the positioning procedure is performed on the to-be-positioned vehicle based on the consistent target resource configuration information.

It should be noted that the above examples are only used to illustrate the embodiments of the present application and are not intended to limit the embodiments of the present application.

In the positioning method provided by the embodiments of the present application, by determining the resource configuration information for the PRS allocated for the terminal in the sidefink scenario, and positioning the to-be-positioned terminal based on the resource configuration information for the PRS, not only the gap in the resource configuration for PRS in the sidelink scenario and the positioning based on the configured PRS is filled, but also the conflicts between PRSs transmitted between terminals are avoided, and the positioning accuracy is higher.

In an embodiment, determining the target resource configuration information for the PRS includes:
determining the target resource configuration information based on first information;
the first information includes one or more of the following:
   ID information of the target terminal; or
   at least one first resource pool, where any first resource pool among the at least one first resource pool includes one or more items of first candidate resource configuration information; or
   first configuration indication information, where the first configuration indication information is used for indicating the target resource configuration information; or
   a first relationship between the ID information of the target terminal and the first candidate resource configuration information.

In an embodiment, the target terminal may determine the target resource configuration information for the PRS based on the first information in the sidefink scenario.

For example, the source positioning terminal may determine the target resource configuration information for the PRS based on the first information.

For example, the to-be-positioned terminal may determine the target resource configuration information for the PRS based on the first information.

In an embodiment, the first information may be transmitted from the network side device to the target terminal, or the first information may be predefined by a protocol.

In an embodiment, the first information may include one or more of the following:
ID information of the target terminal; or
at least one first resource pool, where any first resource pool among the at least one first resource pool includes one or more items of first candidate resource configuration information; or
first configuration indication information, where the first configuration indication information is used for indicating the target resource configuration information; or
second configuration indication information, where the second configuration indication information is used for indicating the first resource pool to which the target resource configuration information belongs; or
a first relationship between the ID information of the target terminal and the first candidate resource configuration information.

In an embodiment, the ID information of the target terminal may include ID information of the source positioning terminal.

In an embodiment, the ID information of the target terminal may include ID information of the to-be-positioned terminal.

In an embodiment, the ID information of the target terminal may include ID information of the source positioning terminal and ID information of the to-be-positioned terminal.

In an embodiment, the ID information of the source positioning terminal and the ID information of the to-be-positioned terminal may be configured when the source positioning terminal and the terminal to be positioned leave the factory.

In an embodiment, the first information may include at least one first resource pool, where any first resource pool among the at least one first resource pool may include one or more items of first candidate resource configuration information.

For example, the first information includes M first resource pools, where any of the M first resource pools includes N items of first candidate resource configuration information, which are respectively represented as PRS0, PRS1, ..., PRSN-1.

In an embodiment, the first information may include the first configuration indication information, where the first configuration indication information may be used for indicating the target resource configuration information.

In an embodiment, the first configuration indication information may be used for indicating the target resource configuration information *per se,* or may be used for indicating an index corresponding to the target resource configuration information.

For example, a first resource pool includes N items of first candidate resource configuration information, the N items of first candidate resource configuration information are respectively represented as PRS0, PRS1, ..., PRSN-1, and the first configuration indication information is PRS1, then the target terminal may determine PRS1 as the target resource configuration information.

For another example, the first configuration indication information is 1, then the target terminal may determine PRS1 in the N items of first candidate resource configuration information as the target resource configuration information.

In an embodiment, the first information may include the second configuration indication information, where the second configuration indication information may be used for indicating the first resource pool to which the target resource configuration information belongs.

In an embodiment, the second configuration indication information may be used for indicating the first resource pool *per se* to which the target resource configuration information belongs, or may be used for indicating an index corresponding to the first resource pool to which the target resource configuration information belongs.

For example, the first information includes M first resource pools, which are represented as R0, R1, ..., RM-1, and the second configuration indication information is R2, then the target terminal may determine that R2 is the first resource pool to which the target resource configuration information belongs.

For another example, the second configuration indication information is 2, then the target terminal may determine that R2 is the first resource pool to which the target resource configuration information belongs. It should be noted that the above examples are only used to illustrate the embodiments of the present application and are not intended to limit the embodiments of the present application.

In an embodiment, the first information may include the first relationship between the ID information of the target terminal and the first candidate resource configuration information.

In an embodiment, the first information may include the first relationship between the ID information of the target terminal and the first candidate resource configuration information *per se.*

In an embodiment, the first information may include the first relationship between the ID information of the target terminal and the index corresponding to the first candidate resource configuration information. In order to avoid the conflicts in PRSs transmitted between terminals, by determining the target resource configuration information for the PRS based on the first information, different PRS resource configuration information may be determined for different terminals, which overcomes the problem of conflicts in PRSs transmitted between terminals in the related art.

In an embodiment, in case that the first information includes the at least one first resource pool and the at least one first resource pool is one first target resource pool, determining the target resource configuration information based on the first information includes:
determining the target resource configuration information from the one or more items of first candidate resource configuration information, where the one or more items of first candidate resource configuration information are included in the first target resource pool.

In an embodiment, in case that the first information includes the at least one first resource pool and the at least one first resource pool is one first target resource pool, the target terminal may determine the target resource configuration information from the one or more items of first candidate resource configuration information, where the one or more items of first candidate resource configuration information are included in the first target resource pool.

For example, in case that the first information includes one first target resource pool R1 (R1 includes N items of first candidate resource configuration information) among M first resource pools (R0, R1, ..., RM-1), the target terminal may determine one of the first candidate resource configuration information (PRS1) as the target resource configuration information from the N items of first candidate resource configuration information (PRS0, PRS1, ..., PRSN-1).

It should be noted that the above examples are only used to illustrate the embodiments of the present application and are not intended to limit the embodiments of the present application.

In an embodiment, in case that the first information includes the at least one first resource pool and the at least one first resource pool includes multiple first resource pools, determining the target resource configuration information based on the first information includes:
determining one first resource pool from the multiple first resource pools as a second target resource pool; and
determining the target resource configuration information from the one or more items of first candidate resource configuration information, where the one or more items of first candidate resource configuration information are included in the second target resource pool.

In an embodiment, in case that the first information includes the at least one first resource pool and the at least one first resource pool includes multiple first resource pools, the target terminal may first determine one first resource pool from the multiple first resource pools as the second target resource pool, and then determine the target resource configuration information from the one or more items of first candidate resource configuration information, where the one or more items of first candidate resource configuration information are included in the second target resource pool.

For example, in case that the first information includes M first resource pools (R0, R1, ..., RM-1), the target terminal may first determine one first resource pool R1 from the M first resource pools as the second target resource pool, and then determine one item of first candidate resource configuration information PRS1 from the N items of first candidate resource configuration information (PRS0, PRS1, ..., PRSN-1) as the target resource configuration information, where the N items of first candidate resource configuration information are included in the second target resource pool R1.

It should be noted that the above examples are only used to illustrate the embodiments of the present application and are not intended to limit the embodiments of the present application.

In an embodiment, determining the target resource configuration information from the one or more items of first candidate resource configuration information includes:
determining the target resource configuration information randomly from the one or more items of first candidate resource configuration information.

In an embodiment, the target terminal determines the target resource configuration information based on the first information, which may include the following step (a) and step (b):
step (a): the target terminal determines one first resource pool from the multiple first resource pools as the second target resource pool; and
step (b): the target terminal randomly determines one item of first candidate resource configuration information from the one or more items of first candidate resource configuration information included in the second target resource pool as the target resource configuration information.

For example, the target terminal first determines one first resource pool R1 from the M first resource pools (R0, R1, ..., RM-1) as the second target resource pool, and then randomly determines one item of first candidate resource configuration information PRS1 from the N items of first candidate configuration information (PRS0, PRS1, ..., PRSN-1) included in R1 as the target resource configuration information.

It should be noted that the above examples are only used to illustrate the embodiments of the present application and are not intended to limit the embodiments of the present application.

In an embodiment, in case that the first information further includes the first configuration indication information, determining the target resource configuration information from the one or more items of first candidate resource configuration information includes:
determining the target resource configuration information from the one or more items of first candidate resource configuration information based on the first configuration indication information.

In an embodiment, the target terminal may first determine one first resource pool from the multiple first resource pools as the second target resource pool, and then determine the target resource configuration information from the one or more items of first candidate resource configuration information included in the second target resource pool based on the first configuration indication information.

For example, the target terminal first determines one first resource pool R1 from the M first resource pools (R0, R1, ..., RM-1) as the second target resource pool, and then the target terminal may determine PRS2 as the target resource configuration information from the N items of first candidate resource configuration information (PRS0, PRS1, ..., PRSN-1) included in the second target resource pool R1 based on the first configuration indication information (where the first configuration indication information is PRS2).

It should be noted that the above examples are only used to illustrate the embodiments of the present application and are not intended to limit the embodiments of the present application.

In an embodiment, in case that the first information further includes the ID information of the target terminal and the first relationship, determining the target resource configuration information from the one or more items of first candidate resource configuration information includes:
determining the target resource configuration information from the one or more items of first candidate resource configuration information based on the ID information of the target terminal and the first relationship;
the first relationship includes any of the following:
   an operation rule between the ID information of the target terminal and an index of the first candidate resource configuration information; or
   a mapping relationship between the ID information of the target terminal and an index of the first candidate resource configuration information.

In an embodiment, the first relationship includes a first operation rule between the ID information of the target terminal and a first index of the first candidate resource configuration information;
in case that the first information further includes the ID information of the target terminal and the first relationship, determining the target resource configuration information from the one or more items of first candidate resource configuration information includes:
determining a second index through the first operation rule based on the ID information of the target terminal, where the second index is one item of the first indexes; and
determining the target resource configuration information from the one or more items of first candidate resource configuration information, where the target resource configuration information corresponds to the second index.

In an embodiment, the target terminal may first determine the second index through the first operation rule based on the ID information of the target terminal, and then determine one item of first candidate resource configuration information from the one or more items of first candidate resource configuration information as the target resource configuration information, where the target resource configuration information corresponds to the second index, the second index is one item of the first indexes, and the first indexes corresponds to the multiple items of first candidate resource configuration information respectively.

In an embodiment, the first relationship may include the first operation rule between the ID information of the target terminal and the first index of the first candidate resource configuration information.

In an embodiment, the first operation rule may include a mathematical operation between the ID information of the target terminal and the first index of the first candidate resource configuration information.

For example, the first operation rule may include a modulus operation on N after summing the source positioning terminal ID and the to-be-positioned terminal ID, where N represents a quantity of items of the first candidate resource configuration information (PRS0, PRS1, ..., PRSN-1).

For example, the first operation rule, predefined by a protocol or configured by a network side device, between the ID information of the target terminal and the first index of the first candidate resource configuration information is: the first index of the first candidate resource configuration information is determined by performing a mathematical operation of (ID_S(i) + ID_S(j)) and performing modulus operation on N, that is, the expression of the first operation rule is mod(ID_S(i)+ID_S(j), N), where ID_S(j) is a source node ID of a to-be-positioned terminal j, ID_S(i) is a source node ID of a source positioning terminal i, and N represents a quantity of items of the first candidate resource configuration information (PRS0, PRS1, ..., PRSN-1).

For example, the target terminal may determine that the second index is 2 through the above-mentioned first operation rule based on the ID information of the target terminal, and then determine PRS2 as the target resource configuration information from N items of first candidate resource configuration information (PRS0, PRS1, ..., PRSN-1), where the first indexes are the indexes (0, 1, ..., N-1) corresponding to the N items of the first candidate resource configuration information respectively, and the second index 2 is one item of the first indexes.

It should be noted that the above examples are only used to illustrate the embodiments of the present application and are not intended to limit the embodiments of the present application.

In an embodiment, the first relationship includes a first mapping relationship between the ID information of the target terminal and a third index of the one or more items of first candidate resource configuration information; in case that the first information further includes the ID information of the target terminal and the first relationship, determining the target resource configuration information from the one or more items of first candidate resource configuration information includes:
determining a fourth index through the first mapping relationship based on the ID information of the target terminal, where the fourth index is one item of the third indexes; and
determining the target resource configuration information from the one or more items of first candidate resource configuration information, where the target resource configuration information corresponds to the fourth index.

In an embodiment, the target terminal may first determine the fourth index through the first mapping relationship based on the ID information of the target terminal, and then determine one item of first candidate resource configuration information from the one or more items of first candidate resource configuration information as the target resource configuration information, where the target resource configuration information corresponds to the fourth index, the fourth index is one item of the third indexes, and the third indexes correspond to the multiple items of first candidate resource configuration information respectively.

In an embodiment, the first relationship may include the first mapping relationship between the ID information of the target terminal and the third index of the one or more items of first candidate resource configuration information.

In an embodiment, the first mapping relationship may be predefined by a system, predefined by a protocol, or configured by a network side device.

For example, table 1 shows a first mapping relationship, determined by a network side device, between the ID information of the target terminal and the third indexes of N items of first candidate resource configuration information. Table 1 is shown as follows.

**Table 1: first mapping relationship between ID information and first candidate resource configuration information**

| ID of target terminal | third index of first candidate PRS resource configuration information |
|---|---|
| 1 | 0 (PRS0) |
| 2 | 1 (PRS1) |
| ... | ... |
| N | N-1 (PRSN-1) |

For example, the target terminal may determine that the fourth index is 1 through the above-mentioned first mapping relationship based on the ID information of the target terminal (for example, the ID of the target terminal is 2), and then determine PRS1 as the target resource configuration information from N items of first candidate resource configuration information (PRS0, PRS1, ..., PRSN-1), where the third indexes are the indexes (0, 1, ..., N-1) corresponding to the N items of first candidate resource configuration information, and the fourth index 1 is one item of the third indexes.

It should be noted that the above examples are only used to illustrate the embodiments of the present application and are not intended to limit the embodiments of the present application.

In an embodiment, determining one first resource pool from the multiple first resource pool as the second target resource pool includes:
determining one first resource pool randomly from the multiple first resource pools as the second target resource pool.

In an embodiment, in case that the first information includes multiple first resource pools among the at least one first resource pool, the target terminal may determine one first resource pool randomly from the multiple first resource pools as the second target resource pool.

For example, in case that the first information includes M first resource pools (R0, R1, ..., RM-1), the target terminal may randomly determine one first resource pool R0 from the M first resource pools as the second target resource pool.

For example, in case that the first information includes M first resource pools (R0, R1, ..., RM-1), the target terminal may randomly determine one first resource pool R1 from the M first resource pools as the second target resource pool.

For example, in case that the first information includes M first resource pools (R0, R1, ..., RM-1), the target terminal may randomly determine one first resource pool RM-1 from the M first resource pools as the second target resource pool.

It should be noted that the above examples are only used to illustrate the embodiments of the present application and are not intended to limit the embodiments of the present application.

In an embodiment, in case that the first information further includes the second configuration indication information, determining one first resource pool from the at least one first resource pool as the second target resource pool includes:
determining one first resource pool from the multiple first resource pool as the second target resource pool based on the second configuration indication information.

In an embodiment, in case that the first information includes the multiple first resource pools among the at least one first resource pool and the second configuration indication information, the target terminal may determine one first resource pool from the multiple first resource pools as the second target resource pool based on the second configuration indication information.

For example, in case that the first information includes M first resource pools (R0, R1, ..., RM-1) and second configuration indication information (where the second configuration indication information is R5), the target terminal may determine one first resource pool R5 from the M first resource pools as the second target resource pool based on the second configuration indication information.

For example, in case that the first information includes M first resource pools (R0, R1, ..., RM-1) and second configuration indication information (where the second configuration indication information is 5), the target terminal may determine one first resource pool R5 from the M first resource pools as the second target resource pool based on the second configuration indication information.

For example, in case that the first information includes M first resource pools (R0, R1, ..., RM-1) and second configuration indication information (where the second configuration indication information is R10), the target terminal may determine one first resource pool R10 from the M first resource pools as the second target resource pool based on the second configuration indication information.

For example, in case that the first information includes M first resource pools (R0, R1, ..., RM-1) and second configuration indication information (where the second configuration indication information is 10), the target terminal may determine one first resource pool R10 from the M first resource pools as the second target resource pool based on the second configuration indication information.

It should be noted that the above examples are only used to illustrate the embodiments of the present application and are not intended to limit the embodiments of the present application.

In an embodiment, determining the target resource configuration information for the PRS includes:
determining the target resource configuration information based on second information;
the second information includes one or more of the following:
   the ID information of the target terminal; or
   at least one second resource pool, where any second resource pool among the at least one second resource pool includes one or more items of second candidate resource configuration information, and any item of second candidate resource configuration information among the one or more items of second candidate resource configuration information is resource configuration information of a first part category; or
   a third resource pool, where the third resource pool includes one or more items of third candidate resource configuration information, any item of third candidate resource configuration information among the one or more items of third candidate resource configuration information is resource configuration information of a second part category, and the second part category includes a category different from the first part category; or
   third configuration indication information, where the third configuration indication information is used for indicating target resource configuration information of the first part category.

In an embodiment, in the sidelink scenario, the target terminal may determine the target resource configuration information based on the second information.

For example, the source positioning terminal may determine the target resource configuration information for the PRS based on the second information.

For example, the to-be-positioned terminal may determine the target resource configuration information for the PRS based on the second information.

In an embodiment, the second information may be transmitted from the network side device to the target terminal, or the second information may be predefined by a protocol.

In an embodiment, the second information may include one or more of the following:
the ID information of the target terminal; or
at least one second resource pool, where any second resource pool among the at least one second resource pool includes one or more items of second candidate resource configuration information, and any item of second candidate resource configuration information among the one or more items of second candidate resource configuration information is resource configuration information of a first part category; or
a third resource pool, where the third resource pool includes one or more items of third candidate resource configuration information, any item of third candidate resource configuration information among the one or more items of third candidate resource configuration information is resource configuration information of a second part category, and the second part category includes a category different from the first part category; or
third configuration indication information, where the third configuration indication information is used for indicating the target resource configuration information of the first part category; or
fourth configuration indication information, where the fourth configuration indication information is used for indicating the target resource configuration information of the second part category; or
fifth configuration indication information, where the fifth configuration indication information is used for indicating the second resource pool to which the target resource configuration information belongs; or
a second relationship between the ID information of the target terminal and the second candidate resource configuration information; or
a third relationship between the ID information of the target terminal and the third candidate resource configuration information.

In an embodiment, the second information may include at least one second resource pool, where any second resource pool among the at least one second resource pool may include one or more items of second candidate resource configuration information, and any item of second candidate resource configuration information among the one or more items of second candidate resource configuration information is resource configuration information of a first part category.

For example, the second information includes M second resource pools, where any second resource pool in the M second resource pools includes N items of second candidate resource configuration information, which are respectively represented as PRS0, PRS1, ..., PRSN-1, where PRS0, PRS1, ..., PRSN-1 are all resource configuration information of the first part category.

For example, in case that the target resource configuration information includes information of three categories, namely A, B and C, the resource configuration information of the first part category may only include information of category A, B or C, or the resource configuration information of the first part category may only include information of categories A and B, information of categories A and C, or information of categories B and C.

In an embodiment, the second information may include the third resource pool, where the third resource pool includes one or more items of third candidate resource configuration information, any item of third candidate resource configuration information among the one or more items of third candidate resource configuration information is resource configuration information of a second part category, and the second part category includes a category different from the first part category.

For example, the third resource pool includes L items of third candidate resource configuration information, where any item of third candidate resource configuration information of the L items of third candidate resource configuration information is resource configuration information of a second part category, and the second part category includes a category different from the first part category.

For example, the target resource configuration information includes information of three categories, namely A, B and C. In case that the resource configuration information of the first part category includes information of category A, the resource configuration information of the second part category may include information of categories B and C; in case that the resource configuration information of the first part category includes information of category B, the resource configuration information of the second part category may include information of categories A and C; in case that the resource configuration information of the first part category includes information of category C, the resource configuration information of the second part category may include information of categories A and B; in case that the resource configuration information of the first part category includes information of categories A and B, the resource configuration information of the second part category may include information of category C; in case that the resource configuration information of the first part category includes information of categories A and C, the resource configuration information of the second part category may include information of category B; in case that the resource configuration information of the first part category includes information of categories B and C, the resource configuration information of the second part category may include information of category A.

In an embodiment, the second information may include the third configuration indication information.

In an embodiment, the third configuration indication information may be used for indicating the target resource configuration information of the first part category.

In an embodiment, the second information may include the fourth configuration indication information.

In an embodiment, the fourth configuration indication information may be used for indicating the target resource configuration information of the second part category.

In an embodiment, the second information may include the fifth configuration indication information.

In an embodiment, the fifth configuration indication information may be used for indicating the second resource pool to which the target resource configuration information belongs.

In an embodiment, the second information may include the second relationship between the ID information of the target terminal and the second candidate resource configuration information.

In an embodiment, the second information may include the second relationship between the ID information of the target terminal and the second candidate resource configuration information *per se.*

In an embodiment, the second information may include the second relationship between the ID information of the target terminal and the index corresponding to the second candidate resource configuration information.

In an embodiment, the second information may include the third relationship between the ID information of the target terminal and the third candidate resource configuration information.

In an embodiment, the second information may include the third relationship between the ID information of the target terminal and the third candidate resource configuration information *per se.*

In an embodiment, the second information may include the third relationship between the ID information of the target terminal and the index corresponding to the third candidate resource configuration information.

In an embodiment, in case that the second information includes the at least one second resource pool and the third resource pool, and the at least one second resource pool is one third target resource pool, determining the target resource configuration information based on the second information includes:
determining the target resource configuration information of the first part category from the one or more items of second candidate resource configuration information, where the one or more items of second candidate resource configuration information are included in the third target resource pool; and
determining the target resource configuration information of the second part category from the one or more items of third candidate resource configuration information.

In an embodiment, in case that the first information includes at least one second resource pool and the third resource pool, and the at least one second resource pool is the third target resource pool, the target terminal may determine the target resource configuration information of the first part category from one or more items of second candidate resource configuration information, and the target terminal may determine the target resource configuration information of the second part category from one or more items of third candidate resource configuration information, where the one or more items of second candidate resource configuration information are included in the third target resource pool.

For example, in case that the second information includes a third target resource pool R1 (R1 includes N items of second candidate resource configuration information) among M second resource pools (R0, R1, ..., RM-1) and a third resource pool (the third resource pool includes L items of third candidate resource configuration information), the target terminal may determine that one item of second candidate resource configuration information from the N items of second candidate resource configuration information is the target resource configuration information of the first part category (information of categories A and B), and the target terminal may determine that one item of third candidate resource configuration information from the L items of third candidate resource configuration information is the target resource configuration information of the second part category (information of category C).

It should be noted that the above examples are only used to illustrate the embodiments of the present application and are not intended to limit the embodiments of the present application.

In an embodiment, in case that the second information includes the at least one second resource pool and the third resource pool, and the at least one second resource pool includes multiple second resource pools, determining the target resource configuration information based on the second information includes:
determining one second resource pool from the multiple second resource pools as a fourth target resource pool;
determining the target resource configuration information of the first part category from the one or more items of second candidate resource configuration information, where the one or more items of second candidate resource configuration information are included in the fourth target resource pool; and
determining the target resource configuration information of the second part category from the one or more items of third candidate resource configuration information.

In an embodiment, in case that the second information includes the at least one second resource pool and the third resource pool, and the at least one second resource pool includes multiple second resource pools, the target terminal may first determine one second resource pool from the multiple second resource pools as the fourth target resource pool, then determine the target resource configuration information of the first part category from the one or more items of second candidate resource configuration information, and determine the target resource configuration information of the second part category from the one or more items of third candidate resource configuration information, where the one or more items of second candidate resource configuration information are included in the fourth target resource pool.

For example, in case that the second information includes M second resource pools (R0, R1, ..., RM-1), and a third resource pool (the third resource pool includes L items of third candidate resource configuration information), the target terminal may first determine one second resource pool R1 from the M second resource pools as the fourth target resource pool, then determine one item of second candidate resource configuration information from the N items of second candidate resource configuration information as the target resource configuration information of the first part category (information of categories A and B), and determine one item of third candidate resource configuration information from the L items of third candidate resource configuration information as the target resource configuration information of the second part category (information of category C), where the N items of second candidate resource configuration information are included in the fourth target resource pool R1.

It should be noted that the above examples are only used to illustrate the embodiments of the present application and are not intended to limit the embodiments of the present application.

In an embodiment, determining the target resource configuration information of the first part category from the one or more items of second candidate resource configuration information includes:
determining the target resource configuration information of the first part category randomly from the one or more items of second candidate resource configuration information.

In an embodiment, the target terminal may first determine one second resource pool from the multiple second resource pools as the fourth target resource pool, then the target terminal may randomly determine one item of the second candidate resource configuration information from the one or more items of second candidate resource configuration information included in the fourth target resource pool as the target resource configuration information of the first part category.

For example, the target terminal first determines one second resource pool R1 from M second resource pools (R0, R1, ..., RM-1) as the fourth target resource pool, and then randomly determines one item of second candidate resource configuration information from N items of second candidate resource configuration information included in R1 as the target resource configuration information of the first part category.

It should be noted that the above examples are only used to illustrate the embodiments of the present application and are not intended to limit the embodiments of the present application.

In an embodiment, determining the target resource configuration information of the second part category from the one or more items of third candidate resource configuration information includes:
determining the target resource configuration information of the second part category randomly from the one or more items of third candidate resource configuration information.

In an embodiment, the target terminal may randomly determine one item of third candidate resource configuration information from the one or more items of third candidate resource configuration information included in the third resource pool as the target resource configuration information of the second part category. For example, the target terminal may randomly determine one item of third candidate resource configuration information from the L items of third candidate resource configuration information included in the third resource pool as the target resource configuration information of the second part category.

It should be noted that the above examples are only used to illustrate the embodiments of the present application and are not intended to limit the embodiments of the present application.

In an embodiment, in case that the second information further includes the third configuration indication information, determining the target resource configuration information of the first part category from the one or more items of second candidate resource configuration information includes:
determining the target resource configuration information of the first part category from the one or more items of second candidate resource configuration information based on the third configuration indication information.

In an embodiment, in the case that the second information further includes the third configuration indication information, the target terminal may determine the target resource configuration information of the first part category from one or more items of second candidate resource configuration information included in the fourth target resource pool based on the third configuration indication information.

For example, the target terminal may determine PRS2 as the target resource configuration information of the first part category from N items of second candidate resource configuration information (PRS0, PRS1, ..., PRSN-1) included in the fourth target resource pool based on the third configuration indication information (where the third configuration indication information is PRS2).

It should be noted that the above examples are only used to illustrate the embodiments of the present application and are not intended to limit the embodiments of the present application.

In an embodiment, in case that the second information further includes the fourth configuration indication information, determining the target resource configuration information of the second part category from the one or more items of third candidate resource configuration information includes:
determining the target resource configuration information of the second part category from the one or more items of third candidate resource configuration information based on the fourth configuration indication information.

In an embodiment, in case that the second information further includes the fourth configuration indication information, the target terminal may determine the target resource configuration information of the second part category from the one or more items of third candidate resource configuration information included in the third resource pool based on the fourth configuration indication information. For example, the target terminal may determine PRS0 as the target resource configuration information of the second part category from L items of third candidate resource configuration information (PRS0, PRS1, ..., PRSL-1) included in the third resource pool based on the fourth configuration indication information (where the fourth configuration indication information is PRS0).

It should be noted that the above examples are only used to illustrate the embodiments of the present application and are not intended to limit the embodiments of the present application.

In an embodiment, the second relationship includes a second operation rule between the ID information of the target terminal and the fifth index of the second candidate resource configuration information;
in case that the second information further includes the ID information of the target terminal and the second relationship, determining the target resource configuration information of the first part category from the one or more items of second candidate resource configuration information includes:
determining a sixth index through the second operation rule based on the ID information of the target terminal, where the sixth index is one item of the fifth indexes; and
determining the target resource configuration information of the first part category from the one or more items of second candidate resource configuration information, where the target resource configuration information corresponds to the sixth index.

In an embodiment, the target terminal may first determine the sixth index through the second operation rule based on the ID information of the target terminal, and then determine the target resource configuration information of the first part category from one or more items of second candidate resource configuration information, where the target resource configuration information of the first part category corresponds to the sixth index, the sixth index is one item of the fifth indexes, and the fifth indexes correspond to the multiple items of second candidate resource configuration information respectively.

In an embodiment, the second relationship may include a second operation rule between the ID information of the target terminal and the fifth index of the second candidate resource configuration information. In an embodiment, the second operation rule may include a mathematical operation between the ID information of the target terminal and the fifth index of the second candidate resource configuration information. For example, the second operation rule may include a mathematical operation of summing the source positioning terminal ID and the to-be-positioned terminal ID and then performing modulus on N, where N represents the number of items of the second candidate resource configuration information (PRS0, PRS1, ..., PRSN-1).

For example, the second operation rule, predefined by a protocol or configured by a network side device, between the ID information of the target terminal and the fifth index of the second candidate resource configuration information is: the sixth index is determined by performing a mathematical operation of (ID_S(i)+ID_S(j)) and performing modulus on N, that is, the expression of the second operation rule is mod(ID_S(i)+ID_S(j), N), where ID_S(j) is the source node ID of the to-be-positioned terminal j, ID_S(i) is the source node ID of the source positioning terminal i, and N represents the number of items of the second candidate resource configuration information (PRS0, PRS1, ..., PRSN-1).

For example, the target terminal may determine that the sixth index is 2 through the above-mentioned second operation rule based on the ID information of the target terminal, and then determine that PRS2 is the target resource configuration information of the first part category from N items of second candidate resource configuration information (PRS0, PRS1, ..., PRSN-1), where the fifth indexes are the indexes (0, 1, ..., N-1) corresponding to the N items of second candidate resource configuration information respectively, and the sixth index 2 is one item of the fifth indexes.

It should be noted that the above examples are only used to illustrate the embodiments of the present application and are not intended to limit the embodiments of the present application.

In an embodiment, the third relationship includes a third operation rule between the ID information of the target terminal and the seventh index of the third candidate resource configuration information;
in case that the second information further includes the ID information of the target terminal and the third relationship, determining the target resource configuration information of the second part category from the one or more items of third candidate resource configuration information includes:
determining an eighth index through the third operation rule based on the ID information of the target terminal, where the eighth index is one item of the seventh indexes; and
determining the target resource configuration information of the second part category from the one or more items of third candidate resource configuration information, where the target resource configuration information corresponds to the eighth index.

In an embodiment, the target terminal may first determine the eighth index through the third operation rule based on the ID information of the target terminal, and then determine the target resource configuration information of the second part category from the one or more items of third candidate resource configuration information, where the target resource configuration information of the second part category corresponds to the eighth index, the eighth index is one item of the seventh indexes, and the seventh indexes correspond to the multiple items of third candidate resource configuration information respectively.

In an embodiment, the third relationship may include a third operation rule between the ID information of the target terminal and the seventh index of the third candidate resource configuration information.

In an embodiment, the third operation rule may include a mathematical operation between the ID information of the target terminal and the seventh index of the third candidate resource configuration information.

For example, the third operation rule may include a mathematical operation of summing the source positioning terminal ID and the to-be-positioned terminal ID and then performing modulus on N, where N represents the number of items of the third candidate resource configuration information (PRS0, PRS1, ..., PRSN-1).

For example, the third operation rule, predefined by a protocol or configured by a network side device, between the ID information of the target terminal and the seventh index of the third candidate resource configuration information is: the sixth index is determined by performing a mathematical operation of (ID_S(i)+ID_S(j)) and performing modulus on N, that is, the expression of the third operation rule is mod(ID_S(i)+ID_S(j), N), where ID_S(j) is the source node ID of the to-be-positioned terminal j, ID_S(i) is the source node ID of the source positioning terminal i, and N represents the number of items of the third candidate resource configuration information (PRS0, PRS1, ..., PRSN-1).

For example, the target terminal may determine that the eighth index is 5 through the above-mentioned third operation rule based on the ID information of the target terminal, and then determine PRS5 as the target resource configuration information of the second part category from L items of third candidate resource configuration information (PRS0, PRS1,..., PRSL-1), where the seventh indexes are the indexes (0, 1,..., L-1) corresponding to the L items of third candidate resource configuration information, and the eighth index 5 is one item of the seventh indexes.

It should be noted that the above examples are only used to illustrate the embodiments of the present application and are not intended to limit the embodiments of the present application.

In an embodiment, the second relationship includes a second mapping relationship between the ID information of the target terminal and a ninth index of the second candidate resource configuration information;
in case that the second information further includes the ID information of the target terminal and the second relationship, determining the target resource configuration information of the first part category from the one or more items of second candidate resource configuration information includes:
determining a tenth index through the second mapping relationship based on the ID information of the target terminal, where the tenth index is one item of the ninth indexes; and
determining the target resource configuration information of the first part category from the one or more items of second candidate resource configuration information, where the target resource configuration information corresponding to the tenth index.

In an embodiment, the target terminal may first determine the tenth index through the second mapping relationship based on the ID information of the target terminal, and then determine the target resource configuration information of the first part category from the one or more items of second candidate resource configuration information, where the target resource configuration information corresponds to the tenth index, the tenth index is one item of the ninth indexes, and the ninth indexes correspond to the multiple items of second candidate resource configuration information respectively.

In an embodiment, the second relationship may include the second mapping relationship between the ID information of the target terminal and the ninth index of the second candidate resource configuration information.

In an embodiment, the second mapping relationship may be predefined by a system, predefined by a protocol, or configured by a network side device.

For example, the target terminal may determine that the tenth index is 1 through the second mapping relationship based on the ID information of the target terminal (for example, the ID of the target terminal is 2), and then determine that PRS1 is the target resource configuration information of the first part category from N items of second candidate resource configuration information (PRS0, PRS1, ..., PRSN-1), where the ninth indexes are the indexes (0, 1, ..., N-1) corresponding to the N items of second candidate resource configuration information respectively, and the tenth index 1 is one item of the ninth indexes.

It should be noted that the above examples are only used to illustrate the embodiments of the present application and are not intended to limit the embodiments of the present application.

In an embodiment, the third relationship includes a third mapping relationship between the ID information of the target terminal and an eleventh index of the third candidate resource configuration information;
in case that the second information further includes the ID information of the target terminal and the third relationship, determining the target resource configuration information of the second part category from the one or more items of third candidate resource configuration information includes:
determining a twelfth index through the third mapping relationship based on the ID information of the target terminal, where the twelfth index is one item of the eleventh indexes; and
determining the target resource configuration information of the second part category from the one or more items of third candidate resource configuration information, where the target resource configuration information corresponds to the twelfth index.

In an embodiment, the target terminal may first determine the twelfth index through the third mapping relationship based on the ID information of the target terminal, and then determine the target resource configuration information of the second part category from the one or more items of third candidate resource configuration information, where the target resource configuration information corresponds to the twelfth index, the twelfth index is one item of the eleventh indexes, and the eleventh indexes correspond to the multiple items of third candidate resource configuration information. In an embodiment, the third relationship may include the third mapping relationship between the ID information of the target terminal and the eleventh index of the third candidate resource configuration information.

In an embodiment, the third mapping relationship may be predefined by a system, predefined by a protocol, or configured by a network side device. For example, table 2 shows a third mapping relationship, determined by a network side device, between the ID information of the target terminal and the eleventh index of L items of third candidate resource configuration information. Table 2 is shown as follows.

**Table 2: mapping relationship between ID information and third candidate resource configuration information**

| ID of target terminal | index of third candidate PRS resource configuration information |
|---|---|
| 1 | 0 (PRS0) |
| 2 | 1 (PRS1) |
| ... | ... |
| L | L-1 (PRSL-1) |

For example, the target terminal may determine that the twelfth index is 7 through the above-mentioned third mapping relationship based on the ID information of the target terminal (for example, the ID of the target terminal is 8), and then determine that PRS7 is the target resource configuration information of the second category from the L items of third candidate resource configuration information (PRS0, PRS1, ..., PRSL-1), where the eleventh indexes are the indexes (0, 1, ..., L-1) corresponding to the L items of third candidate resource configuration information, and the twelfth index 7 is one item of the eleventh indexes.

It should be noted that the above examples are only used to illustrate the embodiments of the present application and are not intended to limit the embodiments of the present application.

In an embodiment, determining one second resource pool from the multiple second resource pools as the fourth target resource pool includes:
determining one second resource pool randomly from the multiple second resource pools as the fourth target resource pool.

In an embodiment, in case that the second information includes at least one second resource pool, and the at least one second resource pool includes multiple second resource pools, the target terminal may randomly determine one second resource pool from the multiple second resource pools as the fourth target resource pool.

For example, in case that the second information includes M second resource pools (R0, R1, ..., RM-1), the target terminal may randomly determine one second resource pool R0 from the M second resource pools as the fourth target resource pool.

For example, in case that the second information includes M second resource pools (R0, R1, ..., RM-1), the target terminal may randomly determine one second resource pool R1 from the M second resource pools as the fourth target resource pool.

For example, in case that the second information includes M second resource pools (R0, R1, ..., RM-1), the target terminal may randomly determine one second resource pool RM-1 from the M second resource pools as the fourth target resource pool.

It should be noted that the above examples are only used to illustrate the embodiments of the present application and are not intended to limit the embodiments of the present application.

In an embodiment, in case that the second information further includes a fifth configuration indication information, determining one second resource pool from the at least one second resource pool as the fourth target resource pool includes:
determining one second resource pool from the multiple second resource pools as the fourth target resource pool based on the fifth configuration indication information.

In an embodiment, in case that the second information includes at least one second resource pool and the fifth configuration indication information, and the at least one second resource pool includes multiple second resource pools, the target terminal may determine one second resource pool from the multiple second resource pools as the fourth target resource pool based on the fifth configuration indication information.

For example, in case that the second information includes M second resource pools (R0, R1, ..., RM-1) and the fifth configuration indication information (where the fifth configuration indication information is R5), the target terminal may determine one second resource pool R5 from the M second resource pools as the fourth target resource pool based on the fifth configuration indication information.

For example, in case that the second information includes M second resource pools (R0, R1, ..., RM-1) and the fifth configuration indication information (where the fifth configuration indication information is 5), the target terminal may determine one second resource pool R5 from the M second resource pools as the fourth target resource pool based on the fifth configuration indication information.

For example, in case that the second information includes M second resource pools (R0, R1, ..., RM-1) and the fifth configuration indication information (where the fifth configuration indication information is R10), the target terminal may determine one second resource pool R10 from the M second resource pools as the fourth target resource pool based on the fifth configuration indication information.

For example, in case that the second information includes M second resource pools (R0, R1, ..., RM-1) and the fifth configuration indication information (where the fifth configuration indication information is 10), the target terminal may determine one second resource pool R10 from the M second resource pools as the fourth target resource pool based on the fifth configuration indication information.

It should be noted that the above examples are only used to illustrate the embodiments of the present application and are not intended to limit the embodiments of the present application.

In an embodiment, in case that the target terminal includes the to-be-positioned terminal, the method further includes:
transmitting the determined target resource configuration information to the source positioning terminal.

In an embodiment, in case that the target terminal includes the to-be-positioned terminal, the target terminal may transmit the target resource configuration information, determined by the target terminal, to the source positioning terminal.

In an embodiment, in case that the target terminal includes the to-be-positioned terminal, the target terminal may first determine the target resource configuration information based on the first information, and then may transmit the target resource configuration information, determined by the target terminal, to the source positioning terminal.

For example, the target terminal is a to-be-positioned vehicle D. The to-be-positioned vehicle D may first determine the target resource configuration information based on the first information, and then transmit the target resource configuration information, determined by the to-be-positioned vehicle D, to a source positioning vehicle A, a source positioning vehicle B, or a source positioning vehicle C.

It should be noted that the above examples are only used to illustrate the embodiments of the present application and are not intended to limit the embodiments of the present application.

In an embodiment, in case that the target terminal includes the source positioning terminal, the method further includes:
transmitting the determined target resource configuration information to the to-be-positioned terminal.

In an embodiment, in case that the target terminal includes the source positioning terminal, the target terminal may transmit the target resource configuration information, determined by the target terminal, to the to-be-positioned terminal.

In an embodiment, in case that the target terminal includes the source positioning terminal, the target terminal may first determine the target resource configuration information based on the first information, and then may transmit the target resource configuration information, determined by the target terminal, to the to-be-positioned terminal.

For example, the target terminal is a source positioning vehicle A. The source positioning vehicle A may first determine the target resource configuration information based on the first information, and then may transmit the target resource configuration information, determined by the source positioning vehicle A, to the to-be-positioned vehicle D.

It should be noted that the above examples are only used to illustrate the embodiments of the present application and are not intended to limit the embodiments of the present application.

In an embodiment, in case that the target terminal includes the to-be-positioned terminal, the method further includes:
receiving the target resource configuration information determined by the source positioning terminal; and
transmitting acknowledgement information to the source positioning terminal in case that it is determined that the target resource configuration information determined by the source positioning terminal is used; or, determining expected target resource configuration information and transmitting the expected target resource configuration information to the source positioning terminal in case that it is determined that the target resource configuration information determined by the source positioning terminal is not used.

In an embodiment, after determining the target resource configuration information, the source positioning terminal may transmit the target resource configuration information, determined by the source positioning terminal, to the to-be-positioned terminal, and then the to-be-positioned terminal receives the target resource configuration information determined by the source positioning terminal and determines whether to use the target resource configuration information determined by the source positioning terminal. In case that the to-be-positioned terminal determines to use the target resource configuration information determined by the source positioning terminal, the to-be-positioned terminal transmits acknowledgement information to the source positioning terminal; in case that the to-be-positioned terminal determines not to use the target resource configuration information determined by the source positioning terminal, the to-be-positioned terminal determines the target resource configuration information that the to-be-positioned terminal expects to use, and transmits the target resource configuration information that the to-be-positioned terminal expects to use to the source positioning terminal.

In an embodiment, the to-be-positioned terminal may receive the target resource configuration information determined by the source positioning terminal.

In an embodiment, the to-be-positioned terminal may determine whether to use the target resource configuration information determined by the source positioning terminal.

In an embodiment, in case that the to-be-positioned terminal determines to use the target resource configuration information determined by the source positioning terminal, the to-be-positioned terminal may transmit acknowledgement information to the source positioning terminal.

In an embodiment, in case that the to-be-positioned terminal determines not to use the target resource configuration information determined by the source positioning terminal, the to-be-positioned terminal may determine the target resource configuration information that the to-be-positioned terminal expects to use, and transmit the target resource configuration information that the to-be-positioned terminal expects to use to the source positioning terminal.

In an embodiment, in case that the target terminal includes the source positioning terminal, performing the positioning procedure on the to-be-positioned terminal based on the target resource configuration information includes:
transmitting the PRS to the to-be-positioned terminal based on the target resource configuration information, where the PRS is used for determining a positioning measurement amount, and the positioning measurement amount is used for determining location information of the to-be-positioned terminal.

In an embodiment, in case that the target terminal includes the source positioning terminal, the source positioning terminal may transmit the PRS to the to-be-positioned terminal based on the target resource configuration information. The to-be-positioned terminal may receive the PRS transmitted from the source positioning terminal, determine the positioning measurement amount based on the PRS, and then determine the location information of the to-be-positioned terminal based on the positioning measurement amount.

In an embodiment, the source positioning terminal may transmit the PRS to the to-be-positioned terminal based on the target resource configuration information.

In an embodiment, the to-be-positioned terminal may determine the positioning measurement amount based on the PRS.

In an embodiment, the to-be-positioned terminal may determine the location information of the to-be-positioned terminal based on the positioning measurement amount.

For example, a source positioning vehicle A first determines that the target resource configuration information is PRS3 based on the first information, and then the source positioning vehicle A transmits a PRS to the to-be-positioned vehicle D based on PRS3. The to-be-positioned vehicle D receives the PRS transmitted from the source positioning vehicle A, determines the positioning measurement amount based on the PRS, and then determines relative location information of the to-be-positioned vehicle D based on the positioning measurement amount.

In the embodiments of the present application, the to-be-positioned terminal is positioned based on the resource configuration information for the PRS by determining the resource configuration information for the PRS allocated to the terminal, which avoids the conflicts between PRSs transmitted between terminals, and the positioning accuracy is higher.

In an embodiment, in case that the target terminal includes the to-be-positioned terminal, performing the positioning procedure on the to-be-positioned terminal based on the target resource configuration information includes:
receiving the PRS transmitted from the source positioning terminal;
determining a positioning measurement amount based on the PRS; and
determining location information of the to-be-positioned terminal based on the positioning measurement amount.

In an embodiment, in case that the target terminal includes the to-be-positioned terminal, the to-be-positioned terminal may receive the PRS transmitted from the source positioning terminal, determine the positioning measurement amount based on the PRS, and determine the location information of the to-be-positioned terminal based on the positioning measurement amount.

In an embodiment, the to-be-positioned terminal may receive the PRS transmitted from the source positioning terminal.

In an embodiment, the to-be-positioned terminal may determine the positioning measurement amount based on the PRS.

In an embodiment, the to-be-positioned terminal may determine the location information of the to-be-positioned terminal based on the positioning measurement amount.

In the embodiments of the present application, the to-be-positioned terminal is positioned based on the resource configuration information for the PRS by determining the resource configuration information for the PRS allocated to the terminal, which avoids the conflicts between PRSs transmitted between terminals, and the positioning accuracy is higher.

In an embodiment, after determining the positioning measurement amount based on the PRS, the method further includes:
transmitting the positioning measurement amount to a network side device, where the positioning measurement amount is used to determine the location information of the to-be-positioned terminal.

In an embodiment, after determining the positioning measurement amount based on the PRS transmitted from the source positioning terminal, the to-be-positioned terminal may transmit the positioning measurement amount to the network side device, and the network side device determines the location information of the to-be-positioned terminal based on the positioning measurement amount.

In an embodiment, the to-be-positioned terminal may transmit the positioning measurement amount to the network side device, and the network side device may also position of the to-be-positioned terminal based on the positioning measurement amount.

In an embodiment, in case that the target terminal includes the to-be-positioned terminal, before determining the target resource configuration information for the PRS, the method further includes:
transmitting positioning request information to the source positioning terminal.

In an embodiment, the to-be-positioned terminal may first transmit the positioning request information to the source positioning terminal, and then the target terminal determines the target resource configuration information based on the first information.

In an embodiment, the to-be-positioned terminal may transmit the positioning request information to the source positioning terminal.

For example, a to-be-positioned vehicle 1 may transmit positioning request information to a source positioning vehicle 2, a source positioning vehicle 3 and a source positioning vehicle 4 respectively. After receiving the positioning request information transmitted from the to-be-positioned vehicle 1, the source positioning vehicle 2, the source positioning vehicle 3 and the source positioning vehicle 4 respectively determine the target resource configuration information based on the first information (for example, the target resource configuration information determined by the source positioning vehicle 2 is PRS2, the target resource configuration information determined by the source positioning vehicle 3 is PRS3, and the target resource configuration information determined by the source positioning vehicle 4 is PRS4), and then transmit PRS to the to-be-positioned vehicle 1 based on the respectively determined target resource configuration information. The to-be-positioned vehicle 1 may determine the relative location information for the to-be-positioned vehicle 1 and the source positioning vehicle 2, determine the relative location information for the to-be-positioned vehicle 1 and the source positioning vehicle 3, and determine the relative location information for the to-be-positioned vehicle 1 and the source positioning vehicle 4 based on the PRS respectively transmitted from the source positioning vehicle 2, the source positioning vehicle 3, and the source positioning vehicle 4.

It should be noted that the above examples are only used to illustrate the embodiments of the present application and are not intended to limit the embodiments of the present application.

In an embodiment, the target resource configuration information includes resource configuration information of one or more of the following categories:
a bandwidth of PRS; or
a repetition factor of PRS; or
a quantity of symbols occupied by PRS; or
start time of PRS; or
a comb factor of PRS; or
a beam direction of PRS.

In an embodiment, the target terminal may determine the target resource configuration information based on the first information, where the target resource configuration information may include resource configuration information of one or more of the following categories:
the bandwidth of PRS; or
the repetition factor of PRS; or
the quantity of symbols occupied by PRS; or
the start time of PRS; or
the comb factor of PRS; or
the beam direction of PRS.

In an embodiment, each of the above items corresponds to a category of resource configuration information.

For example, in case that a second resource pool includes one or more items of second candidate resource configuration information and if any item of second candidate resource configuration information among the one or more items of second candidate resource configuration information is resource configuration information of the first part category, it may be determined that each item of second candidate resource configuration information may include the bandwidth of PRS, the repetition factor of PRS, and the quantity of symbols occupied by PRS; if any item of third candidate resource configuration information among the one or more items of third candidate resource configuration information included in the third resource pool is resource configuration information of the second part category, each item of third candidate resource configuration information may include the start time of PRS, the comb factor of PRS, and the beam direction of PRS.

For example, in case that a second resource pool includes one or more items of second candidate resource configuration information and if any item of second candidate resource configuration information among the one or more items of second candidate resource configuration information is resource configuration information of the first part category, it may be determined that each item of second candidate resource configuration information may include the bandwidth of PRS and the repetition factor of PRS; if any item of third candidate resource configuration information among the one or more items of third candidate resource configuration information included in the third resource pool is resource configuration information of the second part category, each item of third candidate resource configuration information may include the quantity of symbols occupied by PRS, the start time of PRS, the comb factor of PRS, and the beam direction of PRS.

For example, in case that a second resource pool includes one or more items of second candidate resource configuration information and if any item of second candidate resource configuration information among the one or more items of second candidate resource configuration information is resource configuration information of the first part category, it may be determined that each item of second candidate resource configuration information may include the bandwidth of PRS and the start time of PRS; if any item of third candidate resource configuration information among the one or more items of third candidate resource configuration information included in the third resource pool is resource configuration information of the second part category, each item of third candidate resource configuration information may include the quantity of symbols occupied by PRS, the repetition factor of PRS, the comb factor of PRS, and the beam direction of PRS.

The above are only examples of the first part category and the second part category and are not intended to be a limitation thereto. All different allocation schemes that may satisfy the first part category and the second part category are applicable to various embodiments of the present application.

In the positioning method provided by the embodiments of the present application, by determining the resource configuration information for the PRS allocated for the terminal in a sidefink scenario, and positioning the to-be-positioned terminal based on the resource configuration information for the PRS, not only the gap in the resource configuration for PRS in the sidelink scenario and the positioning based on the configured PRS is filled, but also the conflicts between PRSs transmitted between terminals are avoided, and the positioning accuracy is higher.

FIG. 2 is a second schematic flowchart of a positioning method according to an embodiment of the present application. As shown in FIG. 2, an embodiment of the present application provides a positioning method, which may be executed by a network side device, for example, a base station, a location management function (LMF), etc., and the method includes:
step 201: transmitting third information to a target terminal, where the third information is used for determining target resource configuration information for a PRS, and the target resource configuration information is used for positioning a to-be-positioned terminal;
the target terminal includes one or more of the following:
   a source positioning terminal; or
   the to-be-positioned terminal.

In an embodiment, the network side device may transmit the third information to the target terminal, where the third information is used to determine the target resource configuration information for the PRS, and the target resource configuration information is used to position the to-be-positioned terminal.

In an embodiment, the network side device may transmit the third information to the target terminal.

In an embodiment, the target terminal may determine the target resource configuration information for the PRS based on the third information transmitted from the network side device, and perform a positioning procedure on the to-be-positioned terminal based on the target resource configuration information.

In an embodiment, the target terminal may include the source positioning terminal.

In an embodiment, the target terminal may include the to-be-positioned terminal.

In an embodiment, the target terminal may include the source positioning terminal and the to-be-positioned terminal.

In the positioning method provided by the embodiments of the present application, by transmitting the third information to the target terminal, the target terminal may determine the target resource configuration information for the PRS based on the third information, and position the to-be-positioned terminal based on the target resource configuration information, which may not only fill the gap in the resource configuration for PRS in the sidelink scenario and the positioning based on the configured PRS, but also avoid the conflicts between PRSs transmitted between terminals, and the positioning accuracy is higher.

In an embodiment, the third information includes one or more of the following:
at least one first resource pool, where any first resource pool among the at least one first resource pool includes one or more items of first candidate resource configuration information; or
at least one second resource pool, where any second resource pool among the at least one second resource pool includes one or more items of second candidate resource configuration information, and any item of second candidate resource configuration information among the one or more items of second candidate resource configuration information is resource configuration information of a first part category; or
a third resource pool, where the third resource pool includes one or more items of third candidate resource configuration information, any item of third candidate resource configuration information among the one or more items of third candidate resource configuration information is resource configuration information of a second part category, and the second part category includes a category different from the first part category; or
first configuration indication information, where the first configuration indication information is used for indicating the target resource configuration information; or
third configuration indication information, where the third configuration indication information is used for indicating the target resource configuration information of the first part category; or,
a first relationship between ID information of the target terminal and the first candidate resource configuration information.

In an embodiment, the network side device may transmit the third information to the target terminal, where the third information may include one or more of the following:
at least one first resource pool, where any first resource pool among the at least one first resource pool includes one or more items of first candidate resource configuration information; or
at least one second resource pool, where any second resource pool among the at least one second resource pool includes one or more items of second candidate resource configuration information, and any item of second candidate resource configuration information among the one or more items of second candidate resource configuration information is resource configuration information of a first part category; or
a third resource pool, where the third resource pool includes one or more items of third candidate resource configuration information, any item of third candidate resource configuration information among the one or more items of third candidate resource configuration information is resource configuration information of a second part category, and the second part category includes a category different from the first part category; or
first configuration indication information, where the first configuration indication information is used for indicating the target resource configuration information; or
second configuration indication information, where the second configuration indication information is used for indicating the first resource pool to which the target resource configuration information belongs; or
third configuration indication information, where the third configuration indication information is used for indicating the target resource configuration information of the first part category; or
fourth configuration indication information, where the fourth configuration indication information is used for indicating the target resource configuration information of the second part category; or
fifth configuration indication information, where the fifth configuration indication information is used for indicating the second resource pool to which the target resource configuration information belongs; or
a first relationship between ID information of the target terminal and the first candidate resource configuration information; or
a second relationship between ID information of the target terminal and the second candidate resource configuration information; or
a third relationship between ID information of the target terminal and the third candidate resource configuration information.

In an embodiment, the third information may include at least one first resource pool, where any first resource pool among the at least one first resource pool may include one or more items of first candidate resource configuration information.

For example, the third information includes M first resource pools, where any first resource pool among the M first resource pools includes N items of first candidate resource configuration information, respectively represented as PRS0, PRS1, ..., PRSN-1.

The third information may include at least one second resource pool, where any second resource pool among the at least one second resource pool may include one or more items of second candidate resource configuration information.

For example, the third information includes M second resource pools, where any second resource pool among the M second resource pools includes N items of second candidate resource configuration information, respectively represented as PRS0, PRS1, ..., PRSN-1. In an embodiment, any item of second candidate resource configuration information among the one or more items of second candidate resource configuration information may be resource configuration information of the first part category.

For example, the target resource configuration information includes three categories of information, namely A, B and C. The resource configuration information of the first part category may only include information of category A, information of category B, or information of category C, or the resource configuration information of the first part category may only include information of categories A and B, information of categories A and C, or information of categories B and C.

In an embodiment, the third information may include the third resource pool.

In an embodiment, the third resource pool may include one or more items of third candidate resource configuration information, where any item of third candidate resource configuration information among the one or more items of third candidate resource configuration information may be resource configuration information of the second part category, and the second part category includes a category different from the first part category.

For example, the third information includes the third resource pool, and the third resource pool includes L items of third candidate resource configuration information, where any item of third candidate resource configuration information among the L items of third candidate resource configuration information is resource configuration information of the second part category, and the second part category includes a category different from the first part category.

For example, the target resource configuration information includes information of three categories, namely A, B and C. In case that the resource configuration information of the first part category includes information of category A, the resource configuration information of the second part category may include information of categories B and C; in case that the resource configuration information of the first part category includes information of category B, the resource configuration information of the second part category may include information of categories A and C; in case that the resource configuration information of the first part category includes information of category C, the resource configuration information of the second part category may include information of categories A and B; in case that the resource configuration information of the first part category includes information of categories A and B, the resource configuration information of the second part category may include information of category C; in case that the resource configuration information of the first part category includes information of categories A and C, the resource configuration information of the second part category may include information of category B; in case that the resource configuration information of the first part category includes information of categories B and C, the resource configuration information of the second part category may include information of category A.

In an embodiment, the third information may include the first configuration indication information, where the first configuration indication information may be used to indicate the target resource configuration information.

In an embodiment, the first configuration indication information may be used to indicate the target resource configuration information *per se,* or may be used to indicate an index corresponding to the target resource configuration information.

For example, a first resource pool includes N items of first candidate resource configuration information, the N items of first candidate resource configuration information are respectively represented as PRS0, PRS1, ..., PRSN-1, and the first configuration indication information is PRS1, then the target terminal may determine that PRS1 is the target resource configuration information.

For another example, the first configuration indication information is 1, then the target terminal may determine that PRS1 among the N items of first candidate resource configuration information is the target resource configuration information.

In an embodiment, the third information may include the second configuration indication information, where the second configuration indication information may be used to indicate the first resource pool to which the target resource configuration information belongs.

In an embodiment, the second configuration indication information may be used to indicate the first resource pool to which the target resource configuration information belongs, or may be used to indicate the index corresponding to the first resource pool to which the target resource configuration information belongs.

For example, the third information includes M first resource pools, which are respectively represented as R0, R1, ..., RM-1, and the second configuration indication information is R2, then the target terminal may determine that R2 is the first resource pool to which the target resource configuration information belongs.

For another example, the second configuration indication information is 2, then the target terminal may determine that R2 is the first resource pool to which the target resource configuration information belongs.

In an embodiment, the third information may include the third configuration indication information, where the third configuration indication information may be used to indicate the target resource configuration information of the first part category.

In an embodiment, the third configuration indication information may be used to indicate the target resource configuration information *per se* of the first part category, or may be used to indicate the index corresponding to the target resource configuration information of the first part category.

For example, a second resource pool includes N items of second candidate resource configuration information, the N items of second candidate resource configuration information are respectively represented as PRS0, PRS1, ..., PRSN-1, and the third configuration indication information is PRS1, then the target terminal may determine that PRS1 is the target resource configuration information of the first part category.

For another example, the third configuration indication information is 1, then the target terminal may determine that PRS1 among the N items of second candidate resource configuration information is the target resource configuration information of the first part category.

In an embodiment, the third information may include the fourth configuration indication information, where the fourth configuration indication information may be used to indicate the target resource configuration information of the second part category.

In an embodiment, the fourth configuration indication information may be used to indicate the target resource configuration information *per se* of the second part category, or may be used to indicate the index corresponding to the target resource configuration information of the second part category.

For example, the third resource pool includes L items of third candidate resource configuration information, the L items of third candidate resource configuration information are respectively represented as PRS0, PRS1, ..., PRSL-1, and the fourth configuration indication information is PRS1, then the target terminal may determine that PRS1 is the target resource configuration information of the second part category.

For another example, the fourth configuration indication information is 1, then the target terminal may determine that PRS1 among the L items of third candidate resource configuration information is the target resource configuration information of the second part category.

In an embodiment, the third information may include the fifth configuration indication information, where the fifth configuration indication information may be used to indicate the second resource pool to which the target resource configuration information belongs.

In an embodiment, the fifth configuration indication information may be used to indicate the second resource pool *per se* to which the target resource configuration information belongs, or may be used to indicate the index corresponding to the second resource pool to which the target resource configuration information belongs.

For example, the third information includes M second resource pools, which are respectively represented as R0, R1, ..., RM-1, and the fifth configuration indication information is R2, then the target terminal may determine that R2 is the second resource pool to which the target resource configuration information belongs.

For another example, the fifth configuration indication information is 2, then the target terminal may determine that R2 is the second resource pool to which the target resource configuration information belongs.

It should be noted that the above examples are only used to illustrate the embodiments of the present application and are not intended to limit the embodiments of the present application.

In an embodiment, the third information may include the first relationship between the ID information of the target terminal and the first candidate resource configuration information.

In an embodiment, the third information may include the first relationship between the ID information of the target terminal and the first candidate resource configuration information *per se.*

In an embodiment, the first information may include the first relationship between the ID information of the target terminal and the index corresponding to the first candidate resource configuration information.

In an embodiment, the third information may include the second relationship between the ID information of the target terminal and the second candidate resource configuration information.

In an embodiment, the third information may include the second relationship between the ID information of the target terminal and the second candidate resource configuration information *per se.*

In an embodiment, the first information may include the second relationship between the ID information of the target terminal and the index corresponding to the second candidate resource configuration information.

In an embodiment, the third information may include the third relationship between the ID information of the target terminal and the third candidate resource configuration information.

In an embodiment, the third information may include the third relationship between the ID information of the target terminal and the third candidate resource configuration information *per se.*

In an embodiment, the first information may include the third relationship between the ID information of the target terminal and the index corresponding to the third candidate resource configuration information.

In an embodiment, the method further includes:
receiving a positioning measurement amount transmitted from the to-be-positioned terminal; and
determining location information of the to-be-positioned terminal based on the positioning measurement amount;
where the positioning measurement amount is determined by the to-be-positioned terminal based on the PRS transmitted from the source positioning terminal, and the PRS is determined by the source positioning terminal based on the target resource configuration information.

In an embodiment, the network side device may receive the positioning measurement amount transmitted from the to-be-positioned terminal, and determine the location information of the to-be-positioned terminal based on the positioning measurement amount.

In an embodiment, the positioning measurement amount may be determined by the to-be-positioned terminal based on the PRS transmitted from the source positioning terminal.

In an embodiment, the PRS may be determined by the source positioning terminal based on the target resource configuration information.

In the embodiments of the present application, the to-be-positioned terminal is positioned based on the resource configuration information for the PRS by determining the resource configuration information for the PRS allocated for the terminal, which avoids the conflicts between PRSs transmitted between terminals, and the positioning accuracy is higher.

In an embodiment, the target resource configuration information includes resource configuration information of one or more of the following categories:
a bandwidth of PRS; or
a repetition factor of PRS; or
a quantity of symbols occupied by PRS; or
start time of PRS; or
a comb factor of PRS; or
a beam direction of PRS.

In an embodiment, the target terminal may determine the target resource configuration information based on the third information transmitted from the network side device, where the target resource configuration information may include resource configuration information of one or more of the following categories:
the bandwidth of PRS; or
the repetition factor of PRS; or
the quantity of symbols occupied by PRS; or
the start time of PRS; or
the comb factor of PRS; or
the beam direction of PRS.

In an embodiment, each of the above items corresponds to a category of resource configuration information.

Taking the resource configuration information of the first part category as an example, in case that a second resource pool includes one or more items of second candidate resource configuration information and if any item of second candidate resource configuration information among the one or more items of second candidate resource configuration information is resource configuration information of the first part category, it may be determined that each item of second candidate resource configuration information may include the bandwidth of PRS, the repetition factor of PRS, and the quantity of symbols occupied by PRS; if any item of third candidate resource configuration information among the one or more items of third candidate resource configuration information included in the third resource pool is resource configuration information of the second part category, each item of third candidate resource configuration information may include the start time of PRS, the comb factor of PRS, and the beam direction of PRS.

For example, in case that a second resource pool includes one or more items of second candidate resource configuration information and if any item of second candidate resource configuration information among the one or more items of second candidate resource configuration information is resource configuration information of the first part category, it may be determined that each item of second candidate resource configuration information may include the bandwidth of PRS and the repetition factor of PRS; if any item of third candidate resource configuration information among the one or more items of third candidate resource configuration information included in the third resource pool is resource configuration information of the second part category, each item of third candidate resource configuration information may include the quantity of symbols occupied by PRS, the start time of PRS, the comb factor of PRS, and the beam direction of PRS.

For example, in case that a second resource pool includes one or more items of second candidate resource configuration information and if any item of second candidate resource configuration information among the one or more items of second candidate resource configuration information is resource configuration information of the first part category, it may be determined that each item of second candidate resource configuration information may include the bandwidth of PRS and the start time of PRS; if any item of third candidate resource configuration information among the one or more items of third candidate resource configuration information included in the third resource pool is resource configuration information of the second part category, each item of third candidate resource configuration information may include the quantity of symbols occupied by PRS, the repetition factor of PRS, the comb factor of PRS, and the beam direction of PRS.

In the positioning method provided by the embodiments of the present application, by transmitting the third information to the target terminal, the target terminal may determine the target resource configuration information for the PRS based on the third information, and position the to-be-positioned terminal based on the target resource configuration information, which may not only fill the gap in the resource configuration for PRS in the sidelink scenario and the positioning based on the configured PRS, but also avoid the conflicts between PRSs transmitted between terminals, and the positioning accuracy is higher.

In an embodiment, taking a scenario of vehicle positioning as an example, the positioning method provided by the embodiment of the present application are described as follows.

It is assumed that a system predefines N PRS resources to form a first resource pool, where each PRS resource is represented as PRS0, PRS1, ..., PRSN-1, and the time-frequency resource locations of the N PRS resources are known to all vehicles. The said being known to all vehicles may refer to that the time-frequency resource locations are directly fixed in chips of the vehicles based on a protocol, or broadcasted to each vehicle through a base station or a head node (head vehicle). Moreover, each vehicle is configured with a source node ID and/or a target node ID, which may be configured by default.

In an embodiment, a system predefines that the PRS resource used by each vehicle may be determined based on the source node ID and the target node ID corresponding to the vehicle through a certain operation rule.

For example, a system predefines that the index of the PRS resource used by each vehicle is obtained by taking the sum of the vehicle source node ID and the vehicle target node ID, and then performing a modulus operation on N.

It is assumed that the source node ID of a vehicle i is represented by ID_S(i), if the vehicle i transmits a PRS to a target vehicle j, then the target vehicle j is the target node, and it is assumed that the source node ID of the target vehicle j is represented as ID_S(j), then for vehicle i, its target node ID is ID_S(j). Based on the operation rules predefined by the system, the transmitted PRS resource is determined by the modulus operation on N after (ID_S(i) + ID_S(j)), and the expression of the operation rule is mod(ID_S(i) + ID_S(j), N).

FIG. 3 is a schematic diagram of positioning a vehicle according to an embodiment of the present application. As shown in FIG. 3, a to-be-positioned vehicle 1 is positioned based on PRSs transmitted from a source positioning vehicle 2, a source positioning vehicle 3 and a source positioning vehicle 4. It is assumed that N = 10, IDs of vehicles 1 to 4 are 1, 2, 3 and 4 respectively. The vehicle 1 transmits a PRS trigger signaling or positioning request signaling through physical sidelink control channel (PSCCH). After receiving the trigger signaling or positioning request signaling from the vehicle 1, the vehicles 2 to 4 determine that the target node ID is ID_S(1) = 1. Then, the vehicles 2 to 4 perform modulus operations based on the system predefined operation rule.

For example, the vehicle 2 calculates mod(2 + 1,10) = 3, and the vehicle 2 transmits PRS based on the configuration for PRS2 in the first resource pool. Similarly, the vehicle 3 transmits PRS based on the configuration for PRS3 in the first resource pool, and the vehicle 4 transmits PRS based on the configuration for PRS4. The to-be-positioned vehicle 1 may traverse and receive PRS0, PRS1, ..., PRSN-1 at the time indicated by the signaling, and determine that PRS2, PRS3 and PRS4 are received, and then determine that the vehicles 2 to 4 have transmitted the PRSs. Then, the vehicle 1 measures time of arrival (TOA) and obtains relative location information of the vehicle 1 based on a TOA measurement result.

In an embodiment, still taking the vehicle positioning scenario as an example, the positioning method provided by the embodiments of the present application is described as follows.

The network side (base station or LMF) determines a mapping relationship between PRS resources and vehicle source node IDs, and transmits the mapping relationship to all vehicles within its coverage area.

For example, table 3 shows a mapping relationship between PRS resource and vehicle source node ID. Table 3 is shown as follows.

**Table 3: mapping relationship between PRS resource and vehicle source node ID**

| vehicle source node ID | PRS resource in first resource pool |
|---|---|
| 1 | PRS0 |
| 2 | PRS1 |
| ... | ... |
| N | PRSN-1 |

In an embodiment, the network side transmits the above-mentioned mapping relationship between the PRS resource and the vehicle source node ID to each vehicle.

As shown in FIG. 3, the to-be-positioned vehicle 1 is positioned based on the PRSs transmit from the vehicles 2, 3 and 4. The IDs of vehicles 1 to 4 are 1, 2, 3 and 4 respectively. The vehicle 1 transmits a PRS trigger signaling through the PSCCH. After receiving the trigger signaling transmitted from the vehicle 1, the vehicles 2 to 4 determine the corresponding PRS resource configuration based on the above-mentioned mapping relationship and transmit the PRS.

For example, the vehicle 2 performs PRS transmission based on the configuration for PRS1 in the first resource pool. Similarly, the vehicle 3 performs PRS transmission based on the configuration for PRS2 in the first resource pool, and the vehicle 4 performs PRS transmission based on the configuration for PRS3 in the first resource pool. The to-be-positioned vehicle 1 may traverse and receive PRS0, PRS1, ..., PRSN-1 at the time indicated by the signaling, and determine that PRS1, PRS2 and PRS3 are received, and then determine that the vehicles 2 to 4 have transmitted the PRSs. The vehicle 1 measures the TOA, and obtains the relative location information of the vehicle 1 based on the TOA measurement result.

In an embodiment, still taking the vehicle positioning scenario as an example, the positioning method provided by the embodiments of the present application is described as follows.

A system predefines a second resource pool consisting of N PRS resources, where each PRS resource is represented as PRS0, PRS1, ..., PRSN-1 respectively. For each resource in the second resource pool, only part of PRS resource parameters are defined, for example, each PRS resource in the second resource pool is configured with the bandwidth of PRS resource, the repetition factor of PRS resource, the quantity of symbols occupied by PRS resource and the start time of PRS resource. The configuration for the second resource pool is known to all vehicles, and each vehicle is configured with a source node ID.

The network side device (base station or LMF) determines other parameters of each PRS resource in the second resource pool, for example, determines the comb factor of each PRS resource and the beam direction parameter of each PRS resource, and transmits the parameter information to all vehicles within its coverage area.

For example, table 4 shows a mapping relationship between PRS resource and PRS resource parameter determined by LMF. Table 4 is shown as follows.

**Table 4: mapping relationship between PRS resource and PRS resource parameter determined by LMF**

| PRS resource in second resource pool | PRS resource parameter determined by LMF |
|---|---|
| PRS0 | comb factor = 2, QCL information SSB_1 |
| PRS1 | comb factor = 2, QCL information SSB_3 |
| ... | ... |
| PRSN-1 | comb factor = 4, QCL information SSB_0 |

In an embodiment, the network side transmits the above-mentioned mapping relationship between the PRS resource and the PRS resource parameter determined by the LMF to each vehicle.

The system predefines that the PRS resources used by each vehicle are determined based on the source node ID and the target node ID of the vehicle through a certain operation rule. For example, the system predefines that the PRS resource index used by each vehicle is obtained by taking the sum of the vehicle source node ID and the vehicle target node ID and then performing a modulus operation on N. It is assumed that the source node ID of a vehicle i is represented as ID_S(i), if the vehicle i transmits a PRS to a target vehicle j, the target vehicle j is the target node. And it is assumed that the source node ID of the target vehicle j is represented as ID_S(j), then for the vehicle i, its target node ID is ID_S(j). Based on the operation rules predefined by the system, the transmitted PRS resource is determined by the modulus operation on N after (ID_S(i) + ID_S(j)), and the expression of the operation rule is mod(ID_S(i) + ID_S(j), N).

As shown in FIG. 3, the to-be-positioned vehicle 1 is positioned based on the PRSs transmitted from the vehicles 2, 3 and 4. It is assumed that N = 10, and the IDs of vehicles 1 to 4 are 1, 2, 3 and 4 respectively. The vehicle 1 transmits a PRS trigger signaling or a positioning request signaling through the PSCCH. After receiving the trigger signaling or the positioning request signaling from the vehicle 1, the vehicles 2 to 4 determine that the target node ID is ID_S(1) = 1. Then, the vehicles 2 to 4 perform modulus operations based on the operation rules predefined by the system.

For example, the vehicle 2 calculates mod(2 + 1,10) = 3, and the vehicle 2 performs PRS transmission based on the configuration (the bandwidth of PRS resource, the repetition factor of PRS resource, the quantity of symbols occupied by PRS resource, and the start time of PRS resource) for PRS2 in the second resource pool and the parameters in the above mapping relationship transmitted from the base station (comb factor, QCL information). Similarly, the vehicle 3 performs PRS transmission based on the configuration for PRS3 in the second resource pool and the parameters in the above mapping relationship transmitted from the base station, and the vehicle 4 performs PRS transmission based on the configuration for PRS4 in the second resource pool and the comb factor and QCL information for PRS4 transmitted from the base station. The to-be-positioned vehicle 1 may traverse and receive PRS0, PRS1, ..., PRSN-1 at the time indicated by the signaling, and determine that PRS2, PRS3 and PRS4 are received, and then determine that the vehicles 2 to 4 have transmitted PRSs. Then the vehicle 1 measures the TOA and obtains the relative location information of the vehicle 1 based on the TOA measurement result.

In an embodiment, still taking the vehicle positioning scenario as an example, the positioning method provided by the embodiments of the present application is described as follows.

It is assumed that a system predefines a first resource pool consisting of N PRS resources, where each PRS resource is represented as PRS0, PRS1, ..., PRSN-1 respectively, and the time-frequency resource locations of the N PRS resources are known to all vehicles.

As shown in FIG. 3, the to-be-positioned vehicle 1 is positioned based on the PRSs transmitted from the vehicles 2, 3 and 4. The vehicle 1 transmits a PRS trigger signaling or a positioning request signaling through the PSCCH. After receiving the trigger signaling or positioning request signaling from the vehicle 1, the vehicles 2 to 4 randomly determine their corresponding PRS resource.

For example, the vehicle 2 randomly selects the configuration for PRS2 in the first resource pool for PRS transmission, and transmits the selection result to the vehicle 1 through the PSCCH. Similarly, the vehicle 3 and the vehicle 4 both randomly select a PRS resource, for example, the vehicle 3 selects the configuration for PRS3 in the first resource pool for PRS transmission, and vehicle 4 selects the configuration for PRS4 in the first resource pool for PRS transmission. The vehicle 3 and the vehicle 4 notify the to-be-positioned vehicle 1 of the resource selection through the control channel respectively. The to-be-positioned vehicle 1 receives the PRS based on the received PRS resource configuration from the vehicles 2, 3 and 4, measures the TOA based on the PRS, and obtains the relative location information of the vehicle 1 based on the TOA measurement result.

In an embodiment, still taking the vehicle positioning scenario as an example, the positioning method provided by the embodiments of the present application is described as follows.

It is assumed that a system predefines a first resource pool consisting of N PRS resources, where each PRS resource is represented as PRS0, PRS1, ..., PRSN-1 respectively, and the time-frequency resource locations of the N PRS resources are known to all vehicles. Each vehicle is configured with a source node ID and/or a target node ID.

In an embodiment, the system predefines that the PRS resource used by each vehicle is determined based on the source node ID and the target node ID of the vehicle through a certain operation rule.

For example, the system predefines that the index of the PRS resource used by each vehicle is obtained by taking the sum of the vehicle source node ID and the vehicle target node ID and then performing a modulus operation on N.

It is assumed that the source node ID of a vehicle i is represented as ID_S(i), if the vehicle i transmits a PRS to a target vehicle j, then the target vehicle j is the target node. And it is assumed that the source node ID of target vehicle j is represented as ID_S(j), then for the vehicle i, its target node ID is ID_S(j). Based on the operation rules predefined by the system, the transmitted PRS resource is determined by the modulus operation on N after (ID_S(i) + ID_S(j)), and the expression of the operation rule is mod(ID_S(i) + ID_S(j), N).

As shown in FIG. 3, the to-be-positioned vehicle 1 is positioned based on the PRSs transmitted from the source positioning vehicle 2, the source positioning vehicle 3 and the source positioning vehicle 4. It is assumed that N = 10, and the IDs of vehicles 1 to 4 are 1, 2, 3 and 4 respectively. The vehicle 1 transmits a PRS trigger signaling through the PSCCH. After receiving the trigger signaling from the vehicle 1, the vehicles 2 to 4 determine that the target node ID is ID_S(1) = 1. Then, the vehicles 2 to 4 perform modulus operations based on the operation rules predefined by the system.

For example, the vehicle 2 calculates mod(2 + 1, 10) = 3, and the vehicle 2 performs PRS transmission based on the configuration for PRS2 in the first resource pool. The source positioning vehicle 2 also indicates its determined PRS2 information to the to-be-positioned vehicle 1. Similarly, the vehicle 3 performs PRS transmission based on the configuration for PRS3 in the first resource pool, and indicates PRS3 information to the to-be-positioned vehicle 1. The vehicle 4 performs PRS transmission based on the configuration for PRS4 in the first resource pool, and indicates PRS4 information to the to-be-positioned vehicle 1. The to-be-positioned vehicle 1 only needs to receive PRS2, PRS3 and PRS4, measure the TOA, and obtain the relative location information of the vehicle 1 based on the TOA measurement result.

In an embodiment, after receiving the PRS information indication transmitted from the source positioning vehicle, the to-be-positioned vehicle 1 may transmit acknowledgement information to the source positioning vehicle, which indicates that the to-be-positioned vehicle 1 agrees with the source positioning vehicle to use the corresponding PRS for transmission.

In an embodiment, after receiving the PRS information indication transmitted from the source positioning vehicle and determining to disagree with the PRS information determined by the source positioning vehicle, the to-be-positioned vehicle 1 may determine the PRS information it expects to use and indicate the PRS information to the source positioning vehicle.

For example, the source positioning vehicle 2 indicates the PRS2 information it has determined to the to-be-positioned vehicle 1. However, the to-be-positioned vehicle 1 does not agree to use PRS2 and expects the source positioning vehicle 2 to use PRS8 for transmission. The to-be-positioned vehicle 1 indicates PRS8 information to the source positioning vehicle 2, and the source positioning vehicle 2 uses PRS8 for PRS transmission.

In the positioning method provided by the embodiments of the present application, the PRS resource allocated to the terminal is determined based on the association relationship between the ID information of the terminal and the resource pool, or by a random resource selection, which avoids the conflicts between PRSs transmitted between terminals, and provides positioning performance of higher precision.

In the positioning method provided by the embodiments of the present application, by determining the resource configuration information for the PRS allocated for the terminal in the sidefink scenario, and positioning the to-be-positioned terminal based on the resource configuration information for the PRS, not only the gap in the resource configuration for PRS in the sidelink scenario and the positioning based on the configured PRS is filled, but also the conflicts between PRSs transmitted between terminals are avoided, and the positioning accuracy is higher.

The methods and apparatuses provided in the various embodiments of the present application are based on the same conception. Since the methods and apparatuses solve problems based on similar principles, the implementation of the apparatuses and methods may refer to each other, and the repeated parts are not repeated.

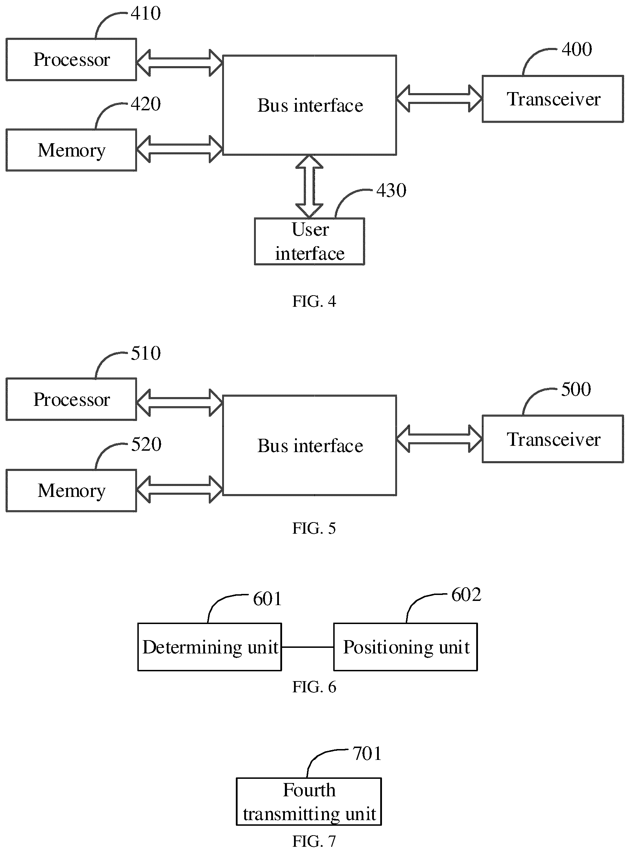

FIG. 4 is a schematic structural diagram of a target terminal according to an embodiment of the present application. As shown in FIG. 4, the target terminal includes a memory 420, a transceiver 400 and a processor 410,
where the memory 420 is used for storing a computer program, the transceiver 400 is used for transmitting and receiving data under control of the processor 410, and the processor 410 is used for reading the computer program in the memory 420 and performing the following operations:
   determining target resource configuration information for a PRS in a sidelink scenario; and
   performing a positioning procedure on a to-be-positioned terminal based on the target resource configuration information;
the target terminal includes one or more of the following:
   a source positioning terminal; or
   the to-be-positioned terminal.

In the target terminal provided by the embodiments of the present application, by determining the resource configuration information for the PRS allocated for the terminal in the sidefink scenario, and positioning the to-be-positioned terminal based on the resource configuration information for the PRS, not only the gap in the resource configuration for PRS in the sidelink scenario and the positioning based on the configured PRS is filled, but also the conflicts between PRSs transmitted between terminals are avoided, and the positioning accuracy is higher.

In an embodiment, the transceiver 400 is used for transmitting and receiving data under control of the processor 410.

In FIG. 4, a bus architecture may include any number of interconnected buses and bridges, which are linked together through various circuits of one or more processors represented by the processor 410 and one or more memories represented by the memory 420. The bus architecture may also link together various other circuits, such as peripherals, voltage regulators, and power management circuits, etc., which are well known in the art, and therefore are not further described in the present application. The bus interface provides an interface. The transceiver 400 may include multiple elements, i.e., including a transmitter and a receiver, units for providing communication with various other devices over transmission media including wireless channels, wired channels, fiber optic cables, and the like. For different user equipment, a user interface 430 may be an interface capable of externally or internally connecting the required equipment, and the connected equipment includes, but not limited to, a keypad, a display, a speaker, a microphone, a joystick, and the like.

The processor 410 is responsible for managing the bus architecture and general processing, and the memory 420 may store data used by the processor 410 when performing operations.

In an embodiment, the processor 410 may be a central processing unit (CPU), an application specific integrated circuit (ASIC), a field-programmable gate array (FPGA), or a complex programmable logic device (CPLD), the processor may also use a multi-core architecture.

The processor calls the computer program stored in the memory to execute any of the methods provided by the embodiments of the present application based on the obtained executable instructions. The processor and the memory may also be physically arranged separately.

In an embodiment, determining the target resource configuration information for the PRS includes:
determining the target resource configuration information based on first information;
the first information includes one or more of the following:
   ID information of the target terminal; or
   at least one first resource pool, where any first resource pool among the at least one first resource pool includes one or more items of first candidate resource configuration information; or
   first configuration indication information, where the first configuration indication information is used for indicating the target resource configuration information; or
   a first relationship between the ID information of the target terminal and the first candidate resource configuration information.

In an embodiment, in case that the first information includes the at least one first resource pool and the at least one first resource pool is one first target resource pool, determining the target resource configuration information based on the first information includes:
determining the target resource configuration information from the one or more items of first candidate resource configuration information, where the one or more items of first candidate resource configuration information are included in the first target resource pool.

In an embodiment, in case that the first information includes the at least one first resource pool and the at least one first resource pool includes multiple first resource pools, determining the target resource configuration information based on the first information includes:
determining one first resource pool from the multiple first resource pools as a second target resource pool; and
determining the target resource configuration information from the one or more items of first candidate resource configuration information, where the one or more items of first candidate resource configuration information are included in the second target resource pool.

In an embodiment, determining the target resource configuration information from the one or more items of first candidate resource configuration information includes:
determining the target resource configuration information randomly from the one or more items of first candidate resource configuration information.

In an embodiment, in case that the first information further includes the first configuration indication information, determining the target resource configuration information from the one or more items of first candidate resource configuration information includes:
determining the target resource configuration information from the one or more items of first candidate resource configuration information based on the first configuration indication information.

In an embodiment, in case that the first information further includes the ID information of the target terminal and the first relationship, determining the target resource configuration information from the one or more items of first candidate resource configuration information includes:
determining the target resource configuration information from the one or more items of first candidate resource configuration information based on the ID information of the target terminal and the first relationship;
the first relationship includes any of the following:
   an operation rule between the ID information of the target terminal and an index of the first candidate resource configuration information; or
   a mapping relationship between the ID information of the target terminal and an index of the first candidate resource configuration information.

In an embodiment, determining the target resource configuration information for the PRS includes:
determining the target resource configuration information based on second information;
the second information includes one or more of the following:
   the ID information of the target terminal; or
   at least one second resource pool, where any second resource pool among the at least one second resource pool includes one or more items of second candidate resource configuration information, and any item of second candidate resource configuration information among the one or more items of second candidate resource configuration information is resource configuration information of a first part category; or
   a third resource pool, where the third resource pool includes one or more items of third candidate resource configuration information, any item of third candidate resource configuration information among the one or more items of third candidate resource configuration information is resource configuration information of a second part category, and the second part category includes a category different from the first part category; or
   third configuration indication information, where the third configuration indication information is used for indicating the target resource configuration information of the first part category.

In an embodiment, in case that the second information includes the at least one second resource pool and the third resource pool, and the at least one second resource pool is one third target resource pool, determining the target resource configuration information based on second information includes:
determining the target resource configuration information of the first part category from the one or more items of second candidate resource configuration information, where the one or more items of second candidate resource configuration information are included in the third target resource pool; and
determining the target resource configuration information of the second part category from the one or more items of third candidate resource configuration information.

In an embodiment, in case that the second information includes the at least one second resource pool and the third resource pool, and the at least one second resource pool includes multiple second resource pools, determining the target resource configuration information based on second information includes:
determining one of the second resource pools as a fourth target resource pool from the multiple second resource pools;
determining the target resource configuration information of the first part category from the one or more items of second candidate resource configuration information, where the one or more items of second candidate resource configuration information are included in the fourth target resource pool; and
determining the target resource configuration information of the second part category from the one or more items of third candidate resource configuration information.

In an embodiment, determining the target resource configuration information of the first part category from the one or more items of second candidate resource configuration information includes:
determining the target resource configuration information of the first part category randomly from the one or more items of second candidate resource configuration information.

In an embodiment, determining the target resource configuration information of the second part category from the one or more items of third candidate resource configuration information includes:
determining the target resource configuration information of the second part category randomly from the one or more items of third candidate resource configuration information.

In an embodiment, in case that the second information further includes the third configuration indication information, determining the target resource configuration information of the first part category from the one or more items of second candidate resource configuration information includes:
determining the target resource configuration information of the first part category from the one or more items of second candidate resource configuration information based on the third configuration indication information.

In an embodiment, in case that the target terminal includes the to-be-positioned terminal, the method further includes:
transmitting the determined target resource configuration information to the source positioning terminal.

In an embodiment, in case that the target terminal includes the source positioning terminal, the method further includes:
transmitting the determined target resource configuration information to the to-be-positioned terminal.

In an embodiment, in case that the target terminal includes the to-be-positioned terminal, the method further includes:
receiving the target resource configuration information determined by the source positioning terminal; and
transmitting acknowledgement information to the source positioning terminal in case that it is determined that the target resource configuration information determined by the source positioning terminal is used; or, determining expected target resource configuration information and transmitting the expected target resource configuration information to the source positioning terminal in case that it is determined that the target resource configuration information determined by the source positioning terminal is not used.

In an embodiment, in case that the target terminal includes the source positioning terminal, performing the positioning procedure on the to-be-positioned terminal based on the target resource configuration information includes:
transmitting the PRS to the to-be-positioned terminal based on the target resource configuration information, where the PRS is used for determining a positioning measurement amount, and the positioning measurement amount is used for determining location information of the to-be-positioned terminal.

In an embodiment, in case that the target terminal includes the to-be-positioned terminal, performing the positioning procedure on the to-be-positioned terminal based on the target resource configuration information includes:
receiving the PRS transmitted from the source positioning terminal;
determining a positioning measurement amount based on the PRS; and
determining location information of the to-be-positioned terminal based on the positioning measurement amount.

In an embodiment, in case that the target terminal includes the to-be-positioned terminal, before determining the target resource configuration information for the PRS, the method further includes:
transmitting positioning request information to the source positioning terminal.

In the target terminal provided by the embodiments of the present application, by determining the resource configuration information for the PRS allocated for the terminal in the sidelink scenario, and positioning the to-be-positioned terminal based on the resource configuration information for the PRS, not only the gap in the resource configuration for PRS in the sidelink scenario and the positioning based on the configured PRS is filled, but also the conflicts between PRSs transmitted between terminals are avoided, and the positioning accuracy is higher.

It should be noted here that the above-mentioned target terminal provided by the embodiments of the present application may implement all the method steps implemented by the above method embodiments performed by a target terminal, and may achieve the same effect. The same parts and beneficial effects as the same method embodiments are not repeated in the present application.

FIG. 5 is a schematic structural diagram of a network side device according to an embodiment of the present application. As shown in FIG. 5, the network side device includes a memory 520, a transceiver 500 and a processor 510,
where the memory 520 is used for storing a computer program, the transceiver 500 is used for transmitting and receiving data under control of the processor 510, and the processor 510 is used for reading the computer program in the memory 520 and performing the following operations:
   transmitting third information to a target terminal, where the third information is used for determining target resource configuration information for a positioning reference signal (PRS), and the target resource configuration information is used for positioning a to-be-positioned terminal;
the target terminal includes one or more of the following:
   a source positioning terminal; or
   the to-be-positioned terminal.

In the network side device provided by the embodiments of the present application, by transmitting the third information to the target terminal, the target terminal may determine the target resource configuration information for the PRS based on the third information, and position the to-be-positioned terminal based on the target resource configuration information, which may not only fill the gap in the resource configuration for PRS in the sidelink scenario and the positioning based on the configured PRS, but also avoid the conflicts between PRSs transmitted between terminals, and the positioning accuracy is higher.

In an embodiment, the transceiver 500 is used for transmitting and receiving data under control of the processor 510.

In FIG. 5, a bus architecture may include any number of interconnected buses and bridges, which are linked together through various circuits of one or more processors represented by the processor 510 and one or more memories represented by the memory 520. The bus architecture may also link together various other circuits, such as peripherals, voltage regulators, and power management circuits, etc., which are well known in the art, and therefore are not further described in the present application. The bus interface provides an interface. The transceiver 500 may include multiple elements, i.e., including a transmitter and a receiver, units for providing communication with various other devices over transmission media including wireless channels, wired channels, fiber optic cables, and the like. The processor 510 is responsible for managing the bus architecture and general processing, and the memory 520 may store data used by the processor 510 when performing operations.

The processor 510 may be a central processing unit (CPU), an application specific integrated circuit (ASIC), a field-programmable gate array (FPGA), or a complex programmable logic device (CPLD), the processor may also use a multi-core architecture.

In an embodiment, the third information includes one or more of the following:
at least one first resource pool, where any first resource pool among the at least one first resource pool includes one or more items of first candidate resource configuration information; or
at least one second resource pool, where any second resource pool among the at least one second resource pool includes one or more items of second candidate resource configuration information, and any item of second candidate resource configuration information among the one or more items of second candidate resource configuration information is resource configuration information of a first part category; or
a third resource pool, where the third resource pool includes one or more items of third candidate resource configuration information, any item of third candidate resource configuration information among the one or more items of third candidate resource configuration information is resource configuration information of a second part category, and the second part category includes a category different from the first part category; or
first configuration indication information, where the first configuration indication information is used for indicating the target resource configuration information; or
third configuration indication information, where the third configuration indication information is used for indicating the target resource configuration information of the first part category; or
a first relationship between ID information of the target terminal and the first candidate resource configuration information.

In an embodiment, the method further includes:
receiving a positioning measurement amount transmitted from the to-be-positioned terminal; and
determining location information of the to-be-positioned terminal based on the positioning measurement amount;
the positioning measurement amount is determined by the to-be-positioned terminal based on the PRS transmitted from the source positioning terminal, and the PRS is determined by the source positioning terminal based on the target resource configuration information.

In the network side device provided by the embodiments of the present application, by transmitting the third information to the target terminal, the target terminal may determine the target resource configuration information for the PRS based on the third information, and position the to-be-positioned terminal based on the target resource configuration information, which may not only fill the gap in the resource configuration for PRS in the sidelink scenario and the positioning based on the configured PRS, but also avoid the conflicts between PRSs transmitted between terminals, and the positioning accuracy is higher.

It should be noted here that the above-mentioned network side device provided by the embodiments of the present application may implement all the method steps implemented by the above method embodiments performed by a network side device, and may achieve the same effect. The same parts and beneficial effects as the same method embodiments are not repeated in the present application.

FIG. 6 is a first schematic structural diagram of a positioning apparatus according to an embodiment of the present application. As shown in FIG. 6, the apparatus includes a determining unit 601 and a positioning unit 602, where
the determining unit 601 is used for determining target resource configuration information for a positioning reference signal (PRS) in a sidelink scenario; and
the positioning unit 602 is used for performing a positioning procedure on a to-be-positioned terminal based on the target resource configuration information;
the target terminal includes one or more of the following:
   a source positioning terminal; or
   the to-be-positioned terminal.

In the positioning apparatus provided by the embodiments of the present application, by determining the resource configuration information for the PRS allocated for the terminal in the sidefink scenario, and positioning the to-be-positioned terminal based on the resource configuration information for the PRS, not only the gap in the resource configuration for PRS in the sidelink scenario and the positioning based on the configured PRS is filled, but also the conflicts between PRSs transmitted between terminals are avoided, and the positioning accuracy is higher.

In an embodiment, the determining unit is further used for:
determining the target resource configuration information based on first information;
the first information includes one or more of the following:
   ID information of the target terminal; or,
   at least one first resource pool, where any first resource pool among the at least one first resource pool includes one or more items of first candidate resource configuration information; or,
   first configuration indication information, where the first configuration indication information is used for indicating the target resource configuration information; or
   a first relationship between the ID information of the target terminal and the first candidate resource configuration information.

In an embodiment, the determining unit is further used for:
determining the target resource configuration information from the one or more items of first candidate resource configuration information in case that the first information includes the at least one first resource pool and the at least one first resource pool is one first target resource pool, where the one or more items of first candidate resource configuration information are included in the first target resource pool.

In an embodiment, the determining unit is further used for:
in case that the first information includes the at least one first resource pool and the at least one first resource pool includes multiple first resource pools:
determining one first resource pool from the multiple first resource pools as a second target resource pool; and
determining the target resource configuration information from the one or more items of first candidate resource configuration information, where the one or more items of first candidate resource configuration information are included in the second target resource pool.

In an embodiment, the determining unit is further used for:
determining the target resource configuration information randomly from the one or more items of first candidate resource configuration information.

In an embodiment, the determining unit is further used for:
determining the target resource configuration information from the one or more items of first candidate resource configuration information based on the first configuration indication information in case that the first information further includes the first configuration indication information.

In an embodiment, the determining unit is further used for:
determining the target resource configuration information from the one or more items of first candidate resource configuration information based on the ID information of the target terminal and the first relationship in case that the first information further includes the ID information of the target terminal and the first relationship;
the first relationship includes any of the following:
   an operation rule between the ID information of the target terminal and an index of the first candidate resource configuration information; or
   a mapping relationship between the ID information of the target terminal and an index of the first candidate resource configuration information.

In an embodiment, the determining unit is further used for:
determining the target resource configuration information based on second information;
the second information includes one or more of the following:
   the ID information of the target terminal; or
   at least one second resource pool, where any second resource pool among the at least one second resource pool includes one or more items of second candidate resource configuration information, and any item of second candidate resource configuration information among the one or more items of second candidate resource configuration information is resource configuration information of a first part category; or
   a third resource pool, where the third resource pool includes one or more items of third candidate resource configuration information, any item of third candidate resource configuration information among the one or more items of third candidate resource configuration information is resource configuration information of a second part category, and the second part category includes a category different from the first part category; or
   third configuration indication information, where the third configuration indication information is used for indicating the target resource configuration information of the first part category.

In an embodiment, the determining unit is further used for:
in case that the second information includes the at least one second resource pool and the third resource pool, and the at least one second resource pool is one third target resource pool:
determining the target resource configuration information of the first part category from the one or more items of second candidate resource configuration information, where the one or more items of second candidate resource configuration information are included in the third target resource pool; and
determining the target resource configuration information of the second part category from the one or more items of third candidate resource configuration information.

In an embodiment, the determining unit is further used for:
in case that the second information includes the at least one second resource pool and the third resource pool and the at least one second resource pool includes multiple second resource pools:
determining one of the second resource pools as a fourth target resource pool from the multiple second resource pools;
determining the target resource configuration information of the first part category from the one or more items of second candidate resource configuration information, where the one or more items of second candidate resource configuration information are included in the fourth target resource pool; and
determining the target resource configuration information of the second part category from the one or more items of third candidate resource configuration information.

In an embodiment, the determining unit is further used for:
determining the target resource configuration information of the first part category randomly from the one or more items of second candidate resource configuration information.

In an embodiment, the determining unit is further used for:
determining the target resource configuration information of the second part category randomly from the one or more items of third candidate resource configuration information.

In an embodiment, the determining unit is further used for:
determining the target resource configuration information of the first part category from the one or more items of second candidate resource configuration information based on the third configuration indication information in case that the second information further includes the third configuration indication information.

In an embodiment, the apparatus further includes a first transmitting unit, and the first transmitting unit is used for:
transmitting the determined target resource configuration information to the source positioning terminal in case that the target terminal includes the to-be-positioned terminal.

In an embodiment, the first transmitting unit is further used for:
transmitting the determined target resource configuration information to the to-be-positioned terminal in case that the target terminal includes the source positioning terminal.

In an embodiment, the apparatus further includes a first receiving unit, and the first receiving unit is used for:
in case that the target terminal includes the to-be-positioned terminal:
receiving the target resource configuration information determined by the source positioning terminal; and
transmitting acknowledgement information to the source positioning terminal in case that it is determined that the target resource configuration information determined by the source positioning terminal is used; or, determining expected target resource configuration information and transmitting the expected target resource configuration information to the source positioning terminal in case that it is determined that the target resource configuration information determined by the source positioning terminal is not used.

In an embodiment, the positioning unit is further used for:
transmitting the PRS to the to-be-positioned terminal based on the target resource configuration information in case that the target terminal includes the source positioning terminal, where the PRS is used for determining a positioning measurement amount, and the positioning measurement amount is used for determining location information of the to-be-positioned terminal.

In an embodiment, the positioning unit is further used for:
in case that the target terminal includes the to-be-positioned terminal:
receiving the PRS transmitted from the source positioning terminal;
determining a positioning measurement amount based on the PRS; and
determining location information of the to-be-positioned terminal based on the positioning measurement amount.

In an embodiment, the apparatus further includes a third transmitting unit, and the third transmitting unit is used for:
transmitting positioning request information to the source positioning terminal in case that the target terminal includes the to-be-positioned terminal.

In the positioning apparatus provided by the embodiments of the present application, by determining the resource configuration information for the PRS allocated for the terminal in the sidefink scenario, and positioning the to-be-positioned terminal based on the resource configuration information for the PRS, not only the gap in the resource configuration for PRS in the sidelink scenario and the positioning based on the configured PRS is filled, but also the conflicts between PRSs transmitted between terminals are avoided, and the positioning accuracy is higher.

FIG. 7 is a second schematic structural diagram of a positioning apparatus according to an embodiment of the present application. As shown in FIG. 7, the apparatus includes a fourth transmitting unit 701, where
the fourth transmitting unit 701 is used for transmitting third information to a target terminal, where the third information is used for determining target resource configuration information for a PRS, and the target resource configuration information is used for positioning a to-be-positioned terminal;
the target terminal includes one or more of the following:
   a source positioning terminal; or
   the to-be-positioned terminal.

In the positioning apparatus provided by the embodiments of the present application, by transmitting the third information to the target terminal, the target terminal may determine the target resource configuration information for the PRS based on the third information, and position the to-be-positioned terminal based on the target resource configuration information, which may not only fill the gap in the resource configuration for PRS in the sidelink scenario and the positioning based on the configured PRS, but also avoid the conflicts between PRSs transmitted between terminals, and the positioning accuracy is higher.

In an embodiment, the third information includes one or more of the following:
at least one first resource pool, where any first resource pool among the at least one first resource pool includes one or more items of first candidate resource configuration information; or
at least one second resource pool, where any second resource pool among the at least one second resource pool includes one or more items of second candidate resource configuration information, and any item of second candidate resource configuration information among the one or more items of second candidate resource configuration information is resource configuration information of a first part category; or
a third resource pool, where the third resource pool includes one or more items of third candidate resource configuration information, any item of third candidate resource configuration information among the one or more items of third candidate resource configuration information is resource configuration information of a second part category, and the second part category includes a category different from the first part category; or
first configuration indication information, where the first configuration indication information is used for indicating the target resource configuration information; or
third configuration indication information, where the third configuration indication information is used for indicating the target resource configuration information of the first part category; or
a first relationship between ID information of the target terminal and the first candidate resource configuration information.

In an embodiment, the apparatus further includes a second receiving unit, and the second receiving unit is used for:
receiving a positioning measurement amount transmitted from the to-be-positioned terminal; and
determining location information of the to-be-positioned terminal based on the positioning measurement amount;
the positioning measurement amount is determined by the to-be-positioned terminal based on the PRS transmitted from the source positioning terminal, and the PRS is determined by the source positioning terminal based on the target resource configuration information.

In the positioning apparatus provided by the embodiments of the present application, by transmitting the third information to the target terminal, the target terminal may determine the target resource configuration information for the PRS based on the third information, and position the to-be-positioned terminal based on the target resource configuration information, which may not only fill the gap in the resource configuration for PRS in the sidelink scenario and the positioning based on the configured PRS, but also avoid the conflicts between PRSs transmitted between terminals, and the positioning accuracy is higher.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a U disk, a mobile hard disk, a read-only memory (ROM), a random access memory (RAM), a magnetic disk, or a compact disk.

It should be noted here that the above-mentioned apparatus provided by the embodiments of the present application may implement all the method steps implemented by the above method embodiments, and may achieve the same effect. The same parts and beneficial effects as the same method embodiments are not repeated here.

An embodiment of the present application provides a processor readable storage medium storing a computer program, where the computer program causes a processor to perform the methods provided by the above-mentioned embodiments. For example, the methods include:
determining target resource configuration information for a positioning reference signal (PRS) in a sidelink scenario; and
performing a positioning procedure on a to-be-positioned terminal based on the target resource configuration information;
the target terminal includes one or more of the following:
   a source positioning terminal; or
   the to-be-positioned terminal.

For another example, the methods include:
transmitting third information to a target terminal, where the third information is used for determining target resource configuration information for a PRS, and the target resource configuration information is used for positioning a to-be-positioned terminal;
the target terminal includes one or more of the following:
   a source positioning terminal; or
   the to-be-positioned terminal.

The processor readable storage medium may be any available medium or data storage device that may be accessed by the processor, including but not limited to, a magnetic storage (e.g., a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, a non-volatile memory (NAND FLASH), a solid-state drive (SSD)), etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A positioning method, performed by a target terminal, comprising:
determining target resource configuration information for a positioning reference signal, PRS, in a sidelink scenario; and
performing a positioning procedure on a to-be-positioned terminal based on the target resource configuration information;
the target terminal comprises one or more of the following:
a source positioning terminal; or
the to-be-positioned terminal.

2. The method of claim 1, wherein determining the target resource configuration information for the PRS comprises:
determining the target resource configuration information based on first information;
the first information comprises one or more of the following:
identity, ID, information of the target terminal; or
at least one first resource pool, wherein any first resource pool among the at least one first resource pool comprises one or more items of first candidate resource configuration information; or
first configuration indication information, wherein the first configuration indication information is used for indicating the target resource configuration information; or
a first relationship between the ID information of the target terminal and the first candidate resource configuration information.

3. The method of claim 2, wherein in case that the first information comprises the at least one first resource pool and the at least one first resource pool is one first target resource pool, determining the target resource configuration information based on the first information comprises:
determining the target resource configuration information from the one or more items of first candidate resource configuration information, wherein the one or more items of first candidate resource configuration information is the one or more items of first candidate resource configuration information comprised in the first target resource pool.

4. The method of claim 2, wherein in case that the first information comprises the at least one first resource pool and the at least one first resource pool comprises multiple first resource pools, determining the target resource configuration information based on the first information comprises:
determining one first resource pool from the multiple first resource pools as a second target resource pool; and
determining the target resource configuration information from the one or more items of first candidate resource configuration information, wherein the one or more items of first candidate resource configuration information is the one or more items of first candidate resource configuration information comprised in the second target resource pool.

5. The method of claim 3 or 4, wherein determining the target resource configuration information from the one or more items of first candidate resource configuration information comprises:
determining the target resource configuration information randomly from the one or more items of first candidate resource configuration information.

6. The method of claim 3 or 4, wherein in case that the first information further comprises the first configuration indication information, determining the target resource configuration information from the one or more items of first candidate resource configuration information comprises:
determining the target resource configuration information from the one or more items of first candidate resource configuration information based on the first configuration indication information.

7. The method of claim 3 or 4, wherein in case that the first information further comprises the ID information of the target terminal and the first relationship, determining the target resource configuration information from the one or more items of first candidate resource configuration information comprises:
determining the target resource configuration information from the one or more items of first candidate resource configuration information based on the ID information of the target terminal and the first relationship;
the first relationship comprises any of the following:
an operation rule between the ID information of the target terminal and an index of the first candidate resource configuration information; or
a mapping relationship between the ID information of the target terminal and an index of the first candidate resource configuration information.

8. The method of claim 1, wherein determining the target resource configuration information for the PRS comprises:
determining the target resource configuration information based on second information;
the second information comprises one or more of the following:
the ID information of the target terminal; or
at least one second resource pool, wherein any second resource pool among the at least one second resource pool comprises one or more items of second candidate resource configuration information, and any item of second candidate resource configuration information among the one or more items of second candidate resource configuration information is resource configuration information of a first part category; or
a third resource pool, wherein the third resource pool comprises one or more items of third candidate resource configuration information, any item of third candidate resource configuration information among the one or more items of third candidate resource configuration information is resource configuration information of a second part category, and the second part category comprises a category different from the first part category; or
third configuration indication information, wherein the third configuration indication information is used for indicating the target resource configuration information of the first part category.

9. The method of claim 8, wherein in case that the second information comprises the at least one second resource pool and the third resource pool, and the at least one second resource pool is one third target resource pool, determining the target resource configuration information based on second information comprises:
determining the target resource configuration information of the first part category from the one or more items of second candidate resource configuration information, wherein the one or more items of second candidate resource configuration information is the one or more items of second candidate resource configuration information comprised in the third target resource pool; and
determining the target resource configuration information of the second part category from the one or more items of third candidate resource configuration information.

10. The method of claim 8, wherein in case that the second information comprises the at least one second resource pool and the third resource pool, and the at least one second resource pool comprises multiple second resource pools, determining the target resource configuration information based on second information comprises:
determining one of the second resource pools as a fourth target resource pool from the multiple second resource pools;
determining the target resource configuration information of the first part category from the one or more items of second candidate resource configuration information, wherein the one or more items of second candidate resource configuration information is the one or more items of second candidate resource configuration information comprised in the fourth target resource pool; and
determining the target resource configuration information of the second part category from the one or more items of third candidate resource configuration information.

11. The method of claim 9 or 10, wherein determining the target resource configuration information of the first part category from the one or more items of second candidate resource configuration information comprises:
determining the target resource configuration information of the first part category randomly from the one or more items of second candidate resource configuration information.

12. The method of claim 9 or 10, wherein determining the target resource configuration information of the second part category from the one or more items of third candidate resource configuration information comprises:
determining the target resource configuration information of the second part category randomly from the one or more items of third candidate resource configuration information.

13. The method of claim 9 or 10, wherein in case that the second information further comprises the third configuration indication information, determining the target resource configuration information of the first part category from the one or more items of second candidate resource configuration information comprises:
determining the target resource configuration information of the first part category from the one or more items of second candidate resource configuration information based on the third configuration indication information.

14. The method of any of claims 1 to 4 or 8 to 10, wherein in case that the target terminal comprises the to-be-positioned terminal, the method further comprises:
transmitting the determined target resource configuration information to the source positioning terminal.

15. The method of any of claims 1 to 4 or 8 to 10, wherein in case that the target terminal comprises the source positioning terminal, the method further comprises:
transmitting the determined target resource configuration information to the to-be-positioned terminal.

16. The method of any of claims 1 to 4 or 8 to 10, wherein in case that the target terminal comprises the to-be-positioned terminal, the method further comprises:
receiving the target resource configuration information determined by the source positioning terminal; and
transmitting acknowledgement information to the source positioning terminal in case that it is determined that the target resource configuration information determined by the source positioning terminal is used; or, determining expected target resource configuration information and transmitting the expected target resource configuration information to the source positioning terminal in case that it is determined that the target resource configuration information determined by the source positioning terminal is not used.

17. The method of any of claims 1 to 4 or 8 to 10, wherein in case that the target terminal comprises the source positioning terminal, performing the positioning procedure on the to-be-positioned terminal based on the target resource configuration information comprises:
transmitting the PRS to the to-be-positioned terminal based on the target resource configuration information, wherein the PRS is used for determining a positioning measurement amount, and the positioning measurement amount is used for determining location information of the to-be-positioned terminal.

18. The method of any of claims 1 to 4 or 8 to 10, wherein in case that the target terminal comprises the to-be-positioned terminal, performing the positioning procedure on the to-be-positioned terminal based on the target resource configuration information comprises:
receiving the PRS transmitted from the source positioning terminal;
determining a positioning measurement amount based on the PRS; and
determining location information of the to-be-positioned terminal based on the positioning measurement amount.

19. The method of any of claims 1 to 4 or 8 to 10, wherein in case that the target terminal comprises the to-be-positioned terminal, before determining the target resource configuration information for the PRS, the method further comprises:
transmitting positioning request information to the source positioning terminal.

20. A positioning method, performed by a network side device, comprising:
transmitting third information to a target terminal, wherein the third information is used for determining target resource configuration information for a positioning reference signal, PRS, and the target resource configuration information is used for positioning a to-be-positioned terminal;
the target terminal comprises one or more of the following:
a source positioning terminal; or
the to-be-positioned terminal.

21. The method of claim 20, wherein the third information comprises one or more of the following:
at least one first resource pool, wherein any first resource pool among the at least one first resource pool comprises one or more items of first candidate resource configuration information; or
at least one second resource pool, wherein any second resource pool among the at least one second resource pool comprises one or more items of second candidate resource configuration information, and any item of second candidate resource configuration information among the one or more items of second candidate resource configuration information is resource configuration information of a first part category; or
a third resource pool, wherein the third resource pool comprises one or more items of third candidate resource configuration information, any item of third candidate resource configuration information among the one or more items of third candidate resource configuration information is resource configuration information of a second part category, and the second part category comprises a category different from the first part category; or
first configuration indication information, wherein the first configuration indication information is used for indicating the target resource configuration information; or
third configuration indication information, wherein the third configuration indication information is used for indicating the target resource configuration information of the first part category; or
a first relationship between identity, ID, information of the target terminal and the first candidate resource configuration information.

22. The method of claim 20 or 21, wherein the method further comprises:
receiving a positioning measurement amount transmitted from the to-be-positioned terminal; and
determining location information of the to-be-positioned terminal based on the positioning measurement amount;
the positioning measurement amount is determined by the to-be-positioned terminal based on the PRS transmitted from the source positioning terminal, and the PRS is determined by the source positioning terminal based on the target resource configuration information.

23. A target terminal, comprising a memory, a transceiver and a processor,
wherein the memory is used for storing a computer program, the transceiver is used for transmitting and receiving data under control of the processor, and the processor is used for reading the computer program in the memory and performing the following operations of:
determining target resource configuration information for a positioning reference signal, PRS, in a sidelink scenario; and
performing a positioning procedure on a to-be-positioned terminal based on the target resource configuration information;
the target terminal comprises one or more of the following:
a source positioning terminal; or
the to-be-positioned terminal.

24. The target terminal of claim 23, wherein determining the target resource configuration information for the PRS comprises:
determining the target resource configuration information based on first information;
the first information comprises one or more of the following:
identity, ID, information of the target terminal; or
at least one first resource pool, wherein any first resource pool among the at least one first resource pool comprises one or more items of first candidate resource configuration information; or
first configuration indication information, wherein the first configuration indication information is used for indicating the target resource configuration information; or
a first relationship between the ID information of the target terminal and the first candidate resource configuration information.

25. The target terminal of claim 24, wherein in case that the first information comprises the at least one first resource pool and the at least one first resource pool is one first target resource pool, determining the target resource configuration information based on the first information comprises:
determining the target resource configuration information from the one or more items of first candidate resource configuration information, wherein the one or more items of first candidate resource configuration information is the one or more items of first candidate resource configuration information comprised in the first target resource pool.

26. The target terminal of claim 24, wherein in case that the first information comprises the at least one first resource pool and the at least one first resource pool comprises multiple first resource pools, determining the target resource configuration information based on the first information comprises:
determining one first resource pool from the multiple first resource pools as a second target resource pool; and
determining the target resource configuration information from the one or more items of first candidate resource configuration information, wherein the one or more items of first candidate resource configuration information is the one or more items of first candidate resource configuration information comprised in the second target resource pool.

27. The target terminal of claim 25 or 26, wherein determining the target resource configuration information from the one or more items of first candidate resource configuration information comprises:
determining the target resource configuration information randomly from the one or more items of first candidate resource configuration information.

28. The target terminal of claim 25 or 26, wherein in case that the first information further comprises the first configuration indication information, determining the target resource configuration information from the one or more items of first candidate resource configuration information comprises:
determining the target resource configuration information from the one or more items of first candidate resource configuration information based on the first configuration indication information.

29. The target terminal of claim 25 or 26, wherein in case that the first information further comprises the ID information of the target terminal and the first relationship, determining the target resource configuration information from the one or more items of first candidate resource configuration information comprises:
determining the target resource configuration information from the one or more items of first candidate resource configuration information based on the ID information of the target terminal and the first relationship;
the first relationship comprises any of the following:
an operation rule between the ID information of the target terminal and an index of the first candidate resource configuration information; or
a mapping relationship between the ID information of the target terminal and an index of the first candidate resource configuration information.

30. The target terminal of claim 23, wherein determining the target resource configuration information for the PRS comprises:
determining the target resource configuration information based on second information;
the second information comprises one or more of the following:
the ID information of the target terminal; or
at least one second resource pool, wherein any second resource pool among the at least one second resource pool comprises one or more items of second candidate resource configuration information, and any item of second candidate resource configuration information among the one or more items of second candidate resource configuration information is resource configuration information of a first part category; or
a third resource pool, wherein the third resource pool comprises one or more items of third candidate resource configuration information, any item of third candidate resource configuration information among the one or more items of third candidate resource configuration information is resource configuration information of a second part category, and the second part category comprises a category different from the first part category; or
third configuration indication information, wherein the third configuration indication information is used for indicating the target resource configuration information of the first part category.

31. The target terminal of claim 30, wherein in case that the second information comprises the at least one second resource pool and the third resource pool, and the at least one second resource pool is one third target resource pool, determining the target resource configuration information based on second information comprises:
determining the target resource configuration information of the first part category from the one or more items of second candidate resource configuration information, wherein the one or more items of second candidate resource configuration information is the one or more items of second candidate resource configuration information comprised in the third target resource pool; and
determining the target resource configuration information of the second part category from the one or more items of third candidate resource configuration information.

32. The target terminal of claim 30, wherein in case that the second information comprises the at least one second resource pool and the third resource pool, and the at least one second resource pool comprises multiple second resource pools, determining the target resource configuration information based on second information comprises:
determining one of the second resource pools as a fourth target resource pool from the multiple second resource pools;
determining the target resource configuration information of the first part category from the one or more items of second candidate resource configuration information, wherein the one or more items of second candidate resource configuration information is the one or more items of second candidate resource configuration information comprised in the fourth target resource pool; and
determining the target resource configuration information of the second part category from the one or more items of third candidate resource configuration information.

33. The target terminal of claim 31 or 32, wherein determining the target resource configuration information of the first part category from the one or more items of second candidate resource configuration information comprises:
determining the target resource configuration information of the first part category randomly from the one or more items of second candidate resource configuration information.

34. The target terminal of claim 31 or 32, wherein determining the target resource configuration information of the second part category from the one or more items of third candidate resource configuration information comprises:
determining the target resource configuration information of the second part category randomly from the one or more items of third candidate resource configuration information.

35. The target terminal of claim 31 or 32, wherein in case that the second information further comprises the third configuration indication information, determining the target resource configuration information of the first part category from the one or more items of second candidate resource configuration information comprises:
determining the target resource configuration information of the first part category from the one or more items of second candidate resource configuration information based on the third configuration indication information.

36. The target terminal of any of claims 23 to 26 or 30 to 32, wherein in case that the target terminal comprises the to-be-positioned terminal, the operation further comprises:
transmitting the determined target resource configuration information to the source positioning terminal.

37. The target terminal of any of claims 23 to 26 or 30 to 32, wherein in case that the target terminal comprises the source positioning terminal, the operation further comprises:
transmitting the determined target resource configuration information to the to-be-positioned terminal.

38. The target terminal of any of claims 23 to 26 or 30 to 32, wherein in case that the target terminal comprises the to-be-positioned terminal, the operation further comprises:
receiving the target resource configuration information determined by the source positioning terminal; and
transmitting acknowledgement information to the source positioning terminal in case that it is determined that the target resource configuration information determined by the source positioning terminal is used; or, determining expected target resource configuration information and transmitting the expected target resource configuration information to the source positioning terminal in case that it is determined that the target resource configuration information determined by the source positioning terminal is not used.

39. The target terminal of any of claims 23 to 26 or 30 to 32, wherein in case that the target terminal comprises the source positioning terminal, performing the positioning procedure on the to-be-positioned terminal based on the target resource configuration information comprises:
transmitting the PRS to the to-be-positioned terminal based on the target resource configuration information, wherein the PRS is used for determining a positioning measurement amount, and the positioning measurement amount is used for determining location information of the to-be-positioned terminal.

40. The target terminal of any of claims 23 to 26 or 30 to 32, wherein in case that the target terminal comprises the to-be-positioned terminal, performing the positioning procedure on the to-be-positioned terminal based on the target resource configuration information comprises:
receiving the PRS transmitted from the source positioning terminal;
determining a positioning measurement amount based on the PRS; and
determining location information of the to-be-positioned terminal based on the positioning measurement amount.

41. The target terminal of any of claims 23 to 26 or 30 to 32, wherein in case that the target terminal comprises the to-be-positioned terminal, before determining the target resource configuration information for the PRS, the operation further comprises:
transmitting positioning request information to the source positioning terminal.

42. A network side device, comprising a memory, a transceiver and a processor,
wherein the memory is used for storing a computer program, the transceiver is used for transmitting and receiving data under control of the processor, and the processor is used for reading the computer program in the memory and performing the following operations of:
transmitting third information to a target terminal, wherein the third information is used for determining target resource configuration information for a positioning reference signal, PRS, and the target resource configuration information is used for positioning a to-be-positioned terminal;
the target terminal comprises one or more of the following:
a source positioning terminal; or
the to-be-positioned terminal.

43. The network side device of claim 42, wherein the third information comprises one or more of the following:
at least one first resource pool, wherein any first resource pool among the at least one first resource pool comprises one or more items of first candidate resource configuration information; or
at least one second resource pool, wherein any second resource pool among the at least one second resource pool comprises one or more items of second candidate resource configuration information, and any item of second candidate resource configuration information among the one or more items of second candidate resource configuration information is resource configuration information of a first part category; or
a third resource pool, wherein the third resource pool comprises one or more items of third candidate resource configuration information, any item of third candidate resource configuration information among the one or more items of third candidate resource configuration information is resource configuration information of a second part category, and the second part category comprises a category different from the first part category; or
first configuration indication information, wherein the first configuration indication information is used for indicating the target resource configuration information; or
third configuration indication information, wherein the third configuration indication information is used for indicating the target resource configuration information of the first part category; or
a first relationship between identity, ID, information of the target terminal and the first candidate resource configuration information.

44. The network side device of claim 42 or 43, wherein the operation further comprises:
receiving a positioning measurement amount transmitted from the to-be-positioned terminal; and
determining location information of the to-be-positioned terminal based on the positioning measurement amount;
the positioning measurement amount is determined by the to-be-positioned terminal based on the PRS transmitted from the source positioning terminal, and the PRS is determined by the source positioning terminal based on the target resource configuration information.

45. A positioning apparatus, applied to a target terminal, comprising:
a determining unit, used for determining target resource configuration information for a positioning reference signal, PRS, in a sidelink scenario; and
a positioning unit, used for performing a positioning procedure on a to-be-positioned terminal based on the target resource configuration information;
the target terminal comprises one or more of the following:
a source positioning terminal; or
the to-be-positioned terminal.

46. The apparatus of claim 45, wherein the determining unit is further used for:
determining the target resource configuration information based on first information;
the first information comprises one or more of the following:
identity, ID, information of the target terminal; or
at least one first resource pool, wherein any first resource pool among the at least one first resource pool comprises one or more items of first candidate resource configuration information; or
first configuration indication information, wherein the first configuration indication information is used for indicating the target resource configuration information; or
a first relationship between the ID information of the target terminal and the first candidate resource configuration information.

47. The apparatus of claim 46, wherein the determining unit is further used for:
determining the target resource configuration information from the one or more items of first candidate resource configuration information in case that the first information comprises the at least one first resource pool and the at least one first resource pool is one first target resource pool, wherein the one or more items of first candidate resource configuration information is the one or more items of first candidate resource configuration information comprised in the first target resource pool.

48. The apparatus of claim 46, wherein the determining unit is further used for:
in case that the first information comprises the at least one first resource pool and the at least one first resource pool comprises multiple first resource pools:
determining one first resource pool from the multiple first resource pools as a second target resource pool; and
determining the target resource configuration information from the one or more items of first candidate resource configuration information, wherein the one or more items of first candidate resource configuration information is the one or more items of first candidate resource configuration information comprised in the second target resource pool.

49. The apparatus of claim 47 or 48, wherein the determining unit is further used for:
determining the target resource configuration information randomly from the one or more items of first candidate resource configuration information.

50. The apparatus of claim 47 or 48, wherein the determining unit is further used for:
determining the target resource configuration information from the one or more items of first candidate resource configuration information based on the first configuration indication information in case that the first information further comprises the first configuration indication information.

51. The apparatus of claim 47 or 48, wherein the determining unit is further used for:
determining the target resource configuration information from the one or more items of first candidate resource configuration information based on the ID information of the target terminal and the first relationship in case that the first information further comprises the ID information of the target terminal and the first relationship;
the first relationship comprises any of the following:
an operation rule between the ID information of the target terminal and an index of the first candidate resource configuration information; or
a mapping relationship between the ID information of the target terminal and an index of the first candidate resource configuration information.

52. The apparatus of claim 45, wherein the determining unit is further used for:
determining the target resource configuration information based on second information;
the second information comprises one or more of the following:
the ID information of the target terminal; or
at least one second resource pool, wherein any second resource pool among the at least one second resource pool comprises one or more items of second candidate resource configuration information, and any item of second candidate resource configuration information among the one or more items of second candidate resource configuration information is resource configuration information of a first part category; or
a third resource pool, wherein the third resource pool comprises one or more items of third candidate resource configuration information, any item of third candidate resource configuration information among the one or more items of third candidate resource configuration information is resource configuration information of a second part category, and the second part category comprises a category different from the first part category; or
third configuration indication information, wherein the third configuration indication information is used for indicating the target resource configuration information of the first part category.

53. The apparatus of claim 52, wherein the determining unit is further used for:
in case that the second information comprises the at least one second resource pool and the third resource pool, and the at least one second resource pool is one third target resource pool:
determining the target resource configuration information of the first part category from the one or more items of second candidate resource configuration information, wherein the one or more items of second candidate resource configuration information is the one or more items of second candidate resource configuration information comprised in the third target resource pool; and
determining the target resource configuration information of the second part category from the one or more items of third candidate resource configuration information.

54. The apparatus of claim 52, wherein the determining unit is further used for:
in case that the second information comprises the at least one second resource pool and the third resource pool and the at least one second resource pool comprises multiple second resource pools:
determining one of the second resource pools as a fourth target resource pool from the multiple second resource pools;
determining the target resource configuration information of the first part category from the one or more items of second candidate resource configuration information, wherein the one or more items of second candidate resource configuration information is the one or more items of second candidate resource configuration information comprised in the fourth target resource pool; and
determining the target resource configuration information of the second part category from the one or more items of third candidate resource configuration information.

55. The apparatus of claim 53 or 54, wherein the determining unit is further used for:
determining the target resource configuration information of the first part category randomly from the one or more items of second candidate resource configuration information.

56. The apparatus of claim 53 or 54, wherein the determining unit is further used for:
determining the target resource configuration information of the second part category randomly from the one or more items of third candidate resource configuration information.

57. The apparatus of claim 53 or 54, wherein the determining unit is further used for:
determining the target resource configuration information of the first part category from the one or more items of second candidate resource configuration information based on the third configuration indication information in case that the second information further comprises the third configuration indication information.

58. The apparatus of any of claims 45 to 48 or 52 to 54, wherein the apparatus further comprises a first transmitting unit, and the first transmitting unit is used for:
transmitting the determined target resource configuration information to the source positioning terminal in case that the target terminal comprises the to-be-positioned terminal.

59. The apparatus of any of claims 45 to 48 or 52 to 54, wherein the first transmitting unit is further used for:
transmitting the determined target resource configuration information to the to-be-positioned terminal in case that the target terminal comprises the source positioning terminal.

60. The apparatus of any of claims 45 to 48 or 52 to 54, wherein the apparatus further comprises a first receiving unit, and the first receiving unit is used for:
in case that the target terminal comprises the to-be-positioned terminal:
receiving the target resource configuration information determined by the source positioning terminal; and
transmitting acknowledgement information to the source positioning terminal in case that it is determined that the target resource configuration information determined by the source positioning terminal is used; or, determining expected target resource configuration information and transmitting the expected target resource configuration information to the source positioning terminal in case that it is determined that the target resource configuration information determined by the source positioning terminal is not used.

61. The apparatus of any of claims 45 to 48 or 52 to 54, wherein the positioning unit is further used for:
transmitting the PRS to the to-be-positioned terminal based on the target resource configuration information in case that the target terminal comprises the source positioning terminal, wherein the PRS is used for determining a positioning measurement amount, and the positioning measurement amount is used for determining location information of the to-be-positioned terminal.

62. The apparatus of any of claims 45 to 48 or 52 to 54, wherein the positioning unit is further used for:
in case that the target terminal comprises the to-be-positioned terminal:
receiving the PRS transmitted from the source positioning terminal;
determining a positioning measurement amount based on the PRS; and
determining location information of the to-be-positioned terminal based on the positioning measurement amount.

63. The apparatus of any of claims 45 to 48 or 52 to 54, wherein the apparatus further comprises a third transmitting unit, and the third transmitting unit is used for:
before determining the target resource configuration information for the PRS, transmitting positioning request information to the source positioning terminal in case that the target terminal comprises the to-be-positioned terminal.

64. A positioning apparatus, applied to a network side device, comprising:
a fourth transmitting unit, used for transmitting third information to a target terminal, wherein the third information is used for determining target resource configuration information for a positioning reference signal, PRS, and the target resource configuration information is used for positioning a to-be-positioned terminal;
the target terminal comprises one or more of the following:
a source positioning terminal; or
the to-be-positioned terminal.

65. The apparatus of claim 64, wherein the third information comprises one or more of the following:
at least one first resource pool, wherein any first resource pool among the at least one first resource pool comprises one or more items of first candidate resource configuration information; or
at least one second resource pool, wherein any second resource pool among the at least one second resource pool comprises one or more items of second candidate resource configuration information, and any item of second candidate resource configuration information among the one or more items of second candidate resource configuration information is resource configuration information of a first part category; or
a third resource pool, wherein the third resource pool comprises one or more items of third candidate resource configuration information, any item of third candidate resource configuration information among the one or more items of third candidate resource configuration information is resource configuration information of a second part category, and the second part category comprises a category different from the first part category; or
first configuration indication information, wherein the first configuration indication information is used for indicating the target resource configuration information; or
third configuration indication information, wherein the third configuration indication information is used for indicating the target resource configuration information of the first part category; or
a first relationship between identity, ID, information of the target terminal and the first candidate resource configuration information.

66. The apparatus of claim 64 or 65, wherein the apparatus further comprises a second receiving unit, and the second receiving unit is used for:
receiving a positioning measurement amount transmitted from the to-be-positioned terminal; and
determining location information of the to-be-positioned terminal based on the positioning measurement amount;
the positioning measurement amount is determined by the to-be-positioned terminal based on the PRS transmitted from the source positioning terminal, and the PRS is determined by the source positioning terminal based on the target resource configuration information.

67. A processor readable storage medium storing a computer program, wherein the computer program causes a processor to perform the method of any of claims 1 to 19, or perform the method of any of claims 20 to 22.
